(19) Europäisches Patentamt / European Patent Office / Office européen des brevets

(11) **EP 3 273 038 B1**

(12) **EUROPEAN PATENT SPECIFICATION**

(45) Date of publication and mention
of the grant of the patent:
**21.08.2019 Bulletin 2019/34**

(51) Int Cl.:
***F02D 41/00*** *(2006.01)*

(21) Application number: **17182353.7**

(22) Date of filing: **20.07.2017**

(54) **CONTROL DEVICE FOR INTERNAL COMBUSTION ENGINE AND CONTROL METHOD FOR INTERNAL COMBUSTION ENGINE**

STEUERUNGSVORRICHTUNG FÜR EINEN VERBRENNUNGSMOTOR UND
STEUERUNGSVERFAHREN FÜR EINEN VERBRENNUNGSMOTOR

DISPOSITIF DE COMMANDE POUR MOTEUR À COMBUSTION INTERNE ET PROCÉDÉ DE
COMMANDE POUR MOTEUR À COMBUSTION INTERNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.07.2016 JP 2016144863**

(43) Date of publication of application:
**24.01.2018 Bulletin 2018/04**

(73) Proprietor: **TOYOTA JIDOSHA KABUSHIKI
KAISHA
Toyota-shi, Aichi 471-8571 (JP)**

(72) Inventor: **KOBAYASHI, Junya
Toyota-shi,, Aichi 471-8571 (JP)**

(74) Representative: **D Young & Co LLP
120 Holborn
London EC1N 2DY (GB)**

(56) References cited:
**EP-A1- 1 865 178       EP-A1- 2 915 983
EP-A2- 1 035 315       WO-A1-2015/132644
JP-A- 2002 115 554     US-A1- 2007 261 672
US-A1- 2011 180 039**

**Description**

BACKGROUND OF THE INVENTION

1. Field of the Invention

The present invention relates to a control device for an internal combustion engine and a control method for an internal combustion engine.

2. Description of Related Art

There have been proposed various techniques to reduce an amount of smoke generated in a combustion chamber of a compression self-ignition internal combustion engine including a fuel injection valve configured to directly inject fuel into the combustion chamber. For example, in a case of a device described in Japanese Patent Application Publication No. 2002-115554 (JP 2002-115554 A), a variable-capacity supercharger is provided in an air intake and exhaust system of a diesel engine, which is such a compression self-ignition internal combustion engine. In such a variable-capacity supercharger, a movable vane is attached to an exhaust passage through which exhaust gas passes just before the exhaust gas is sprayed to a turbine wheel. When an opening degree of the movable vane is changed, a flow speed of the exhaust gas sprayed to the turbine wheel is changed and a boost pressure of intake air is changed, so that an amount of the air flowing into the combustion chamber is changed.

In view of this, in the device described in JP 2002-115554 A, an actual air-fuel ratio in the combustion chamber is calculated based on a fuel injection amount and an intake-air amount detected by a sensor. The actual air-fuel ratio thus calculated is an air-fuel ratio that easily generates smoke, the opening degree of the movable vane is adjusted so as to increase the amount of the air to flow into the combustion chamber, so as to reduce a generation amount of smoke.

SUMMARY OF THE INVENTION

The device described in JP 2002-115554 A calculates an average air-fuel ratio in the whole combustion chamber. However, in the combustion chamber, a local air-fuel ratio might become lower than the average air-fuel ratio. For example, when strength of an airflow flowing through the combustion chamber is weak, an amount of the air flowing into a combustion field in which the fuel is injected to burn in the combustion chamber decreases. This may cause an air-fuel ratio in the combustion field to be lower than the average air-fuel ratio. In this case, an amount of oxygen in the combustion field decreases, which might increase the generation amount of smoke in the combustion field. Document EP2915983 discloses the calculation of a local air-fuel ratio and the closing of the EGR valve in order to avoid smoke generation if the amount of available oxygen is insufficient.

Document US2011180039 disclose splitting the main injection when the oxygen supply becomes insufficient.

This invention provides a control device for an internal combustion engine, the control device being able to reduce an amount of smoke to be generated due to oxygen deficiency in a combustion field.

A first aspect of the present invention relates to a control device for an internal combustion engine. The internal combustion engine is a compression self-ignition internal combustion engine, and includes a supercharger and a fuel injection valve. The supercharger is a variable-capacity supercharger including a movable vane. The fuel injection valve is configured to directly inject fuel into a combustion chamber of the internal combustion engine. The control device includes an electronic control unit. The electronic control unit is configured to control a boost pressure of intake air by adjusting an opening degree of the movable vane. The electronic control unit is configured to calculate a local air-fuel ratio. The local air-fuel ratio is an air-fuel ratio in a combustion field. The combustion field is a field where the fuel is injected from the fuel injection valve in the combustion chamber. The electronic control unit is configured to determine whether or not the local air-fuel ratio is richer than a predetermined required air-fuel ratio. The electronic control unit is configured to execute a control to increase the boost pressure, when the electronic control unit determines that the local air-fuel ratio is richer than the predetermined air-fuel ratio.

In the above configuration, the local air-fuel ratio, which is an air-fuel ratio in the combustion field, is found. When the local air-fuel ratio is an air-fuel ratio richer than the predetermined required air-fuel ratio and much smoke might be generated in the combustion field, the boost pressure of the intake air supercharged by the supercharger is increased. When the boost pressure is increased as such, an amount of the air flowing into the combustion chamber increases. As a result, an oxygen amount in the combustion field also increases. Thus, the above configuration enables to reduce an amount of smoke to be generated due to oxygen deficiency in the combustion field. Note that it is preferable that an air-fuel ratio that can restrain, to an allowable amount, the generation amount of smoke in the combustion field be set as the required air-fuel ratio.

In the control device, the electronic control unit may be configured to set a target boost pressure based on an operating state of the internal combustion engine. The electronic control unit may be configured to control the boost pressure so as to reach the target boost pressure. When an oxygen amount in the combustion field at the time when the local air-fuel ratio is the predetermined required air-fuel ratio is assumed a required oxygen amount, the electronic control unit may be configured to change the target boost pressure such that the oxygen amount in the combustion field reaches the required oxygen amount.

With the above configuration, when the electronic control unit determines that the local air-fuel ratio is the air-fuel ratio richer than the required air-fuel ratio, that is, when the oxygen amount in the combustion field is insufficient with respect to the required oxygen amount, the target boost pressure is changed such that the oxygen amount in the combustion field becomes the required oxygen amount. When the target boost pressure is changed so as to compensate a deficient oxygen amount as such, a target boost pressure after the change is a value higher than the target boost pressure when it is determined that the oxygen amount is insufficient, so that the boost pressure is increased. At the time of the increase of the boost pressure, the boost pressure is increased as much as the oxygen deficiency in the combustion field. Accordingly, it is possible to compensate the oxygen deficiency in the combustion field appropriately.

A volume of the combustion field where the fuel burns changes depending on a fuel spray travel distance of the fuel injected from the fuel injection valve, and a piston position at the time when the fuel thus injected starts to burn. Further, the piston position at the time when the fuel starts to burn relates to an injection timing of the fuel. Accordingly, the volume of the combustion field can be found based on the fuel spray travel distance and the injection timing of the fuel. Further, a combustion field air amount, which is an amount of the air in the volume of the combustion field found as such is larger as an amount of the air entering the combustion chamber is larger, so that the combustion field air amount can be found based on the amount of the air entering the combustion chamber. By calculating a ratio between the combustion field air amount thus found and an amount of the fuel injected to the combustion field, it is possible to calculate the local air-fuel ratio.

The internal combustion engine further includes an intake passage and an intake-air amount sensor. The intake-air amount sensor may be provided in the intake passage. The intake-air amount sensor may be configured to detect an amount of the air entering the combustion chamber. In the control device, the electronic control unit is configured to calculate a volume of the combustion field based on a fuel spray travel distance of the fuel injected to the combustion field and an injection timing of the fuel. The electronic control unit is configured to calculate a combustion field air amount based on the amount of the air detected by the intake-air amount sensor. The combustion field air amount is an air amount in the volume of the combustion field. The electronic control unit may be configured to calculate the local air-fuel ratio by calculating a ratio of the combustion field air amount to an amount of the fuel injected to the combustion field.

In the control device, the electronic control unit is configured to execute multistage injection from the fuel injection valve. The calculated local air-fuel ratio is an air-fuel ratio in the combustion field during execution of a main injection. The main injection is an injection with a largest injection amount in the multistage injection. When the electronic control unit determines that the local air-fuel ratio is richer than the predetermined required air-fuel ratio, the electronic control unit is configured to determine whether or not a condition for not increasing the boost pressure is satisfied. When the electronic control unit determines that it is difficult to increase the boost pressure, the electronic control unit is configured to change the main injection from a single injection to a split injection.

With the above configuration, when it is difficult to increase the boost pressure to restrain a generation amount of smoke, that is, when the condition for not increasing the boost is satisfied, the split injection of the main injection is performed. When the split injection of the main injection is performed as such, a temperature in the combustion chamber increases due to burning of the fuel injected first in the split injection. Accordingly, the fuel injected next in the split injection burns immediately after the fuel is injected from the fuel injection valve. Accordingly, in comparison with the fuel injected first in the split injection, the fuel injected next burns at a position closer to the fuel injection valve, so that a combustion field for the fuel injected first is different from a combustion field for the fuel injected next. Accordingly, the fuel injected in the split injection burns in a region where a sufficient oxygen amount is secured, thereby making it possible to reduce an amount of smoke to be generated due to oxygen deficiency in the combustion field.

A second aspect of the present invention is a control method for an internal combustion engine. The internal combustion engine is configured to be controlled by an electronic control unit. The internal combustion engine is a compression self-ignition internal combustion engine, and includes a supercharger and a fuel injection valve. The supercharger is a variable-capacity supercharger including a movable vane. The fuel injection valve is configured to directly inject fuel into a combustion chamber of the internal combustion engine. The control method includes: controlling a boost pressure of intake air by adjusting an opening degree of the movable vane; calculating a local air-fuel ratio, the local air-fuel ratio is an air-fuel ratio in a combustion field, the combustion field is a field where the fuel is injected from the fuel injection valve; determining whether or not the local air-fuel ratio is richer than a predetermined required air-fuel ratio; and increasing the boost pressure, when the electronic control unit determines that the local air-fuel ratio is richer than the required air-fuel ratio, calculating a volume of the combustion field based on a fuel spray travel distance of the fuel injected to the combustion field and an injection timing of the fuel; calculating a combustion field air amount based on the amount of the air detected by an intake-air amount sensor, the combustion field air amount is an air amount in the volume of the combustion field; calculating the local air-fuel ratio by calculating a ratio of the combustion field air amount to an amount of the fuel injected to the combustion field wherein the calculated local air-fuel ratio is an air-fuel ratio in the combustion field during execution of a main injection; and executing multistage injection from the fuel injection valve, wherein the main injection is an injection with a largest injection amount in the multistage injection; when the electronic control unit determines that the local air-fuel ratio is richer than the predetermined required air-fuel ratio, determining whether or not a condition for not increasing the boost pressure is satisfied; and when the electronic control unit determines that the condition for not increasing the boost pressure is satisfied, changing the main injection from a single injection to a split injection.

With the above configuration, it is possible to obtain the same effect as in the first aspect.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a schematic view related to one embodiment of a control device for an internal combustion engine and schematically illustrates an internal combustion engine to which the one embodiment is applied and a configuration around the international combustion engine;

FIG. 2 is a sectional view illustrating a shape of a top face of a piston provided in the internal combustion engine of the embodiment;

FIG. 3 is a plan view of a cavity and illustrates a state of fuel spray at the time of fuel injection in the internal combustion engine of the embodiment;

FIG. 4 is a schematic view illustrating a spraying state of the fuel injected from one injection hole;

FIG. 5 is a partial sectional view of a combustion chamber and illustrates a state of fuel spray at the time of fuel injection in the internal combustion engine of the embodiment;

FIG. 6 is a partial sectional view of the combustion chamber and illustrates a state of fuel spray at the time of fuel injection in the internal combustion engine of the embodiment;

FIG. 7 is a partial sectional view of the combustion chamber and illustrates a state of fuel spray at the time of fuel injection in the internal combustion engine of the embodiment;

FIG. 8 is a partial sectional view of the combustion chamber and illustrates a state of fuel spray at the time of fuel injection in the internal combustion engine of the embodiment;

FIG. 9 is a flow chart illustrating a procedure of a boost pressure control in the embodiment;

FIG. 10 is a flowchart illustrating a series of procedures executed to reduce a generation amount of smoke in the embodiment;

FIG. 11 is a graph illustrating a relationship between a local air-fuel ratio and a generation amount of smoke;

FIG. 12 is a flow chart illustrating a procedure of calculating a local air-fuel ratio in the embodiment;

FIG. 13 is a flow chart illustrating a procedure of increasing a boost pressure in the embodiment;

FIG. 14 is a flow chart illustrating a procedure of performing main injection in a divided manner in the embodiment; and

FIG. 15 is a graph illustrating a setting mode of a second main injection amount and a third main injection amount in the embodiment.

DETAILED DESCRIPTION OF EMBODIMENTS

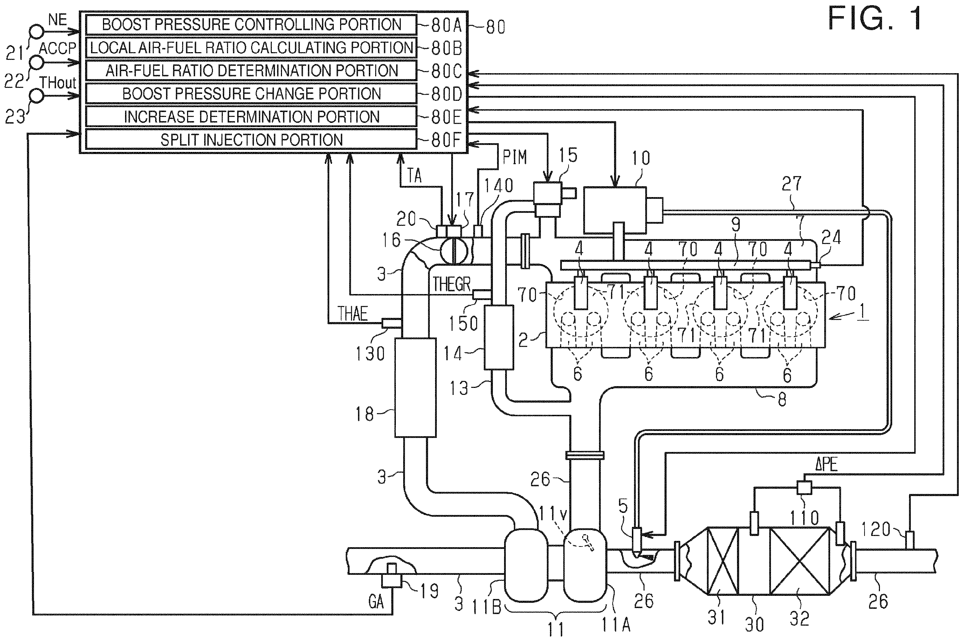

One embodiment of a control device for an internal combustion engine is described below with reference to FIGS. 1 to 15. FIG. 1 illustrates a compression self-ignition diesel engine (hereinafter just referred to as the "engine") 1 to which the control device of the present embodiment is applied, and a configuration around the engine 1.

A plurality of cylinders 70 is provided in the engine 1. Fuel injection valves 4 provided for respective cylinders 70 are attached to a cylinder head 2. Each of the fuel injection valves 4 is provided with a plurality of injection holes for injecting fuel. The fuel is injected from the injection holes of the fuel injection valve 4 to a combustion chamber 71 inside the cylinder 70. Further, the cylinder head 2 is provided with an intake port (not shown) for introducing fresh air into the combustion chamber 71 and an exhaust port 6 for discharging combustion gas from the combustion chamber 71.

The fuel injection valve 4 is connected to a common rail 9. The common rail 9 stores a high-pressure fuel therein. The common rail 9 is connected to a supply pump 10. The supply pump 10 sucks the fuel in the fuel tank and supplies the high-pressure fuel to the common rail 9. The high-pressure fuel supplied to the common rail 9 is injected into the combustion chamber 71 from the fuel injection valve 4.

An intake manifold 7 is connected to the intake port. The intake manifold 7 is connected to an intake passage 3. An intake throttle valve 16 for adjusting an intake-air amount is provided in the intake passage 3. An actuator 17 for adjusting an opening degree of the intake throttle valve 16 is connected to a pivot shaft of the intake throttle valve 16.

An exhaust manifold 8 is connected to the exhaust port 6. The exhaust manifold 8 is connected to an exhaust passage 26. In the middle of the exhaust passage 26, a variable-capacity supercharger (hereinafter referred to as a turbocharger) 11 for supercharging intake air to be introduced into the combustion chamber 71 by use of exhaust gas is provided. The turbocharger 11 includes a turbine housing 11A in which a turbine wheel that rotates by the exhaust gas being blown thereto is accommodated, and a compressor housing 11B in which a compressor turbine that supercharges the intake air is accommodated. An exhaust passage configured to guide the exhaust gas to the turbine wheel is formed in the turbine housing 11A, and in the middle of the exhaust passage, a nozzle vane 11v, which is a movable vane for changing a passage sectional area of the exhaust passage, is provided. An actuator for adjusting an opening degree of the nozzle vane 11v is connected to the nozzle vane 11v. By adjusting the opening degree of the nozzle vane 11v, a flow speed of the exhaust gas blown to the turbine wheel becomes faster as the passage sectional area of the exhaust passage provided with the nozzle vane 11v is narrower, so that a boost pressure increases.

An intercooler 18 is provided in the intake passage 3 between the compressor housing 11B of the turbocharger 11 and the intake throttle valve 16. The intercooler 18 achieves cooling of the intake air heated up by supercharging of the turbocharger 11.

A purification member 30 for purifying the exhaust gas is provided in the exhaust passage 26 on a downstream side relative to the turbine housing 11A. Inside the purification member 30, an oxidation catalyst 31 and a filter 32 are disposed in series in an exhaust-gas flowing direction.

The oxidation catalyst 31 carries a catalyst that oxidizes HC (hydrocarbon) in the exhaust air. Further, the filter 32 is a member for collecting PM (particulate matter) in the exhaust gas and is constituted by porous ceramic. Furthermore, a catalyst is carried by the filter 32 so as to promote oxidation of the PM. The PM in the exhaust gas is collected at the time when the PM passes through a porous wall of the filter 32.

Further, a fuel addition valve 5 for supplying the fuel as an additive to the oxidation catalyst 31 and the filter 32 is provided in the exhaust passage 26 between the turbine housing 11A and the purification member 30. The fuel addition valve 5 is connected to the supply pump 10 via a fuel supply pipe 27. Note that a disposition position of the fuel addition valve 5 can be changed as appropriate, provided that the fuel addition valve 5 is disposed on an upstream side relative to the purification member 30 in an exhaust system.

When an amount of the PM collected by the filter 32 exceeds a predetermined value, the fuel is injected from the fuel addition valve 5 so as to attain regeneration of the filter 32. When the fuel thus injected from the fuel addition valve 5 reaches the oxidation catalyst 31, the fuel is oxidized, so as to increase an exhaust gas temperature. When the exhaust gas with the temperature thus increased in the oxidation catalyst 31 flows into the filter 32, the filter 32 is heated up, so that the PM deposited in the filter 32 is oxidized and reduced. Hereby, the filter 32 is regenerated.

In addition, the engine 1 is provided with an exhaust gas recirculation system (hereinafter referred to as an EGR system). The EGR system is a device configured to reduce an amount of NOx generated in the combustion chamber 71 such that the exhaust gas is partially returned to the intake passage 3 so as to reduce a combustion temperature of a fuel/air mixture in the combustion chamber 71 of the engine 1. The EGR system is constituted by an EGR passage 13 communicating the intake passage 3 with the exhaust manifold 8, an EGR valve 15 provided in the EGR passage 13, an EGR cooler 14 provided in the middle of the EGR passage 13, and so on. When an opening degree of the EGR valve 15 is adjusted in accordance with an engine operation state, an EGR amount, which is an amount of the exhaust gas returned to the intake passage 3 from the exhaust passage 26, is adjusted. Further, the exhaust gas flowing through the EGR passage 13 is cooled by the EGR cooler 14.

Various sensors for detecting an engine operation state are attached to the engine 1. For example, an air-flow meter 19, which is an example of an intake-air amount sensor, is attached to the intake passage 3. The air-flow meter 19 detects an intake-air amount GA, which is a mass flow rate (g/s) of air taken into the engine 1. A throttle valve opening degree sensor 20 detects an opening degree TA of the intake throttle valve 16. A crank angle sensor 21 detects a crank angle of a crankshaft included in the engine 1, and an engine rotation speed NE is calculated from a detection signal of the crank angle sensor 21. An accelerator sensor 22 detects an accelerator operation amount ACCP, which is a stepping amount of an accelerator pedal. An outside air temperature sensor 23 detects an outside air temperature THout. A fuel pressure sensor 24 detects a fuel pressure PF inside the common rail 9.

Further, a differential pressure sensor 110 provided in the purification member 30 detects a pressure difference ΔPE between an exhaust pressure on the upstream side of the filter 32 and an exhaust pressure on the downstream side thereof. The pressure difference ΔPE is used at the time when an amount of the PM collected by the filter 32 is estimated. An exhaust gas temperature sensor 120 provided in the exhaust passage 26 on the downstream side relative to the purification member 30 detects a temperature of the exhaust gas that has passed through the filter 32. The intake passage 3 between the intercooler 18 and the intake throttle valve 16 is provided with an air temperature sensor 130 for detecting an outlet air temperature THAE, which is a temperature of the air that has passed through the intercooler 18. The intake passage 3 on the downstream side relative to the intake throttle valve 16 is provided with a boost pressure sensor 140 for detecting a boost pressure PIM of the air supercharged by the turbocharger 11. The EGR passage 13 is provided with an EGR temperature sensor 150 for detecting an outlet EGR temperature THEGR, which is a temperature of EGR gas that has passed through the EGR cooler 14.

Detection signals of those various sensors are input into an electronic control unit 80. The electronic control unit 80 is mainly constituted by a microcomputer including a central processing unit (CPU), a read-only memory (ROM) in which various programs, maps, and the like are stored in advance, a random access memory (RAM) in which computing results and the like of the CPU are temporarily stored, a timer counter, an input interface, an output interface, and so on.

The electronic control unit 80 performs various controls of the engine 1, such as fuel injection controls of the fuel injection valve 4 and the fuel addition valve 5, a discharge pressure control of the supply pump 10, a driving amount control of the actuator 17 for opening and closing the intake throttle valve 16, an opening degree control of the EGR valve 15, and an opening degree control of the nozzle vane 11v, for example.

For example, the electronic control unit 80 calculates a target pressure of the fuel inside the common rail 9 based on an engine rotation speed NE, an engine load, and the like, and controls a discharge pressure of the supply pump 10 so that an actual fuel pressure PF reaches the target pressure.

Further, the electronic control unit 80 executes multistage injection as a fuel injection pattern of the fuel injection valve 4. The multistage injection is an injection pattern in which the fuel is injected several times in one cycle, and includes a pilot injection, a pre-injection, a main injection, an after injection, and a post injection. The main injection among these injections is executed as follows, for example. First, the electronic control unit 80 calculates a fuel injection amount Q of the fuel injection valve 4 based on an engine rotation speed NE, an engine load, and the like. Subsequently, the electronic control unit 80 sets, as a main injection amount QM, a predetermined ratio (e.g., around 90% or the like) out of the fuel injection amount Q thus calculated. Then, the electronic control unit 80 sets a main injection period TAUm necessary to inject the fuel corresponding to the main injection amount QM from the fuel injection valve 4, based on the main injection amount QM and a fuel pressure PF, and also sets a main fuel injection timing Tm to start the main injection based on the engine rotation speed NE and so on. After that, when the main fuel injection timing Tm comes, the electronic control unit 80 opens the fuel injection valve 4 and starts the main injection, and at the time point when the main injection period TAUm has elapsed from the main fuel injection timing Tm, the electronic control unit 80 closes the fuel injection valve 4 so as to finish the main injection.

Further, the electronic control unit 80 calculates a target EGR rate based on the engine rotation speed NE, the engine load, and the like. Note that the EGR rate is a value found by "an EGR amount flowing into the cylinder 70 / (a fresh-air amount flowing into the cylinder 70 + an EGR amount flowing into the cylinder 70)." The electronic control unit 80 controls an opening degree of the EGR valve 15 so that an actual EGR rate reaches the target EGR rate.

In the meantime, when an amount of oxygen existing in a combustion field for the fuel is insufficient, in the combustion chamber 71, with respect to an amount of the fuel due to a decrease in strength of airflow flowing through the combustion chamber 71 or a decrease in an intake-air amount flowing into the combustion chamber 71 itself, much smoke might be generated from the combustion field.

In view of this, in a simple mode described below, the electronic control unit 80 calculates a volume of such a combustion field and finds an air amount existing in the volume thus calculated, so as to calculate a local air-fuel ratio AFL, which is an air-fuel ratio (a mass ratio of the air to the fuel) in the combustion field. In a case where it can be determined, based on the local air-fuel ratio AFL thus calculated, that oxygen in the combustion field is insufficient, a boost pressure PIM of the intake air supercharged by the turbocharger 11 is increased so as to increase an amount of the air flowing into the combustion chamber 71, so that an amount of oxygen in the combustion field is increased. Hereby, a generation amount of smoke is reduced. Further, when it is difficult to increase the boost pressure, the main injection amount QM is divided to be injected several times, that is, a split injection of the main injection is executed so as to reduce the generation amount of smoke.

Note that, in the present embodiment, the multistage injection is performed as the fuel injection pattern of the fuel injection valve 4, and smoke is easily generated at the time of the main injection with a largest fuel injection amount in the multistage injection. In view of this, the local air-fuel ratio AFL at the time of the main injection is calculated.

The electronic control unit 80 executes a series of processes to reduce such a generation amount of smoke. Herein, the processes executed by the electronic control unit 80 will be described conveniently as a boost pressure controlling portion 80A, a local air-fuel ratio calculating portion 80B, an air-fuel ratio determination portion 80C, a boost pressure change portion 80D, an increase determination portion 80E, and a split injection portion 80F, which are provided as functional portions constituted by at least either one of software and hardware.

The boost pressure controlling portion 80A sets a target boost pressure PIMP based on an engine operation state. Then, the boost pressure controlling portion 80A performs a boost control of the turbocharger 11 by adjusting an opening degree of the nozzle vane 11v so that a boost pressure PIM reaches the target boost pressure PIMP.

The local air-fuel ratio calculating portion 80B calculates the local air-fuel ratio AFL. The air-fuel ratio determination portion 80C determines whether the local air-fuel ratio AFL thus calculated is an air-fuel ratio richer than a predetermined required air-fuel ratio AFD or not.

When the air-fuel ratio determination portion 80C determines that the local air-fuel ratio AFL is the air-fuel ratio richer than the required air-fuel ratio AFD, the boost pressure change portion 80D increases the boost pressure PIM of the intake air supercharged by the turbocharger 11,

When the air-fuel ratio determination portion 80C determines that the local air-fuel ratio AFL is the air-fuel ratio richer than the required air-fuel ratio AFD, the increase determination portion 80E determines whether it is difficult for the boost pressure change portion 80D to increase the boost pressure PIM or not. That is, the increase determination portion 80E determines whether or not a condition for not increasing the boost pressure is satisfied.

When the increase determination portion 80E determines that it is difficult to increase the boost pressure PIM, the split injection portion 80F changes the main injection of the fuel from a single injection to the split injection. The single injection of the main injection indicates an injection mode to inject the whole main injection amount QM by one main injection.

The following describes a series of processes to calculate the local air-fuel ratio AFL and to reduce the generation amount of smoke. First of all, the following describes the piston 90 including a cavity in which the fuel is injected.

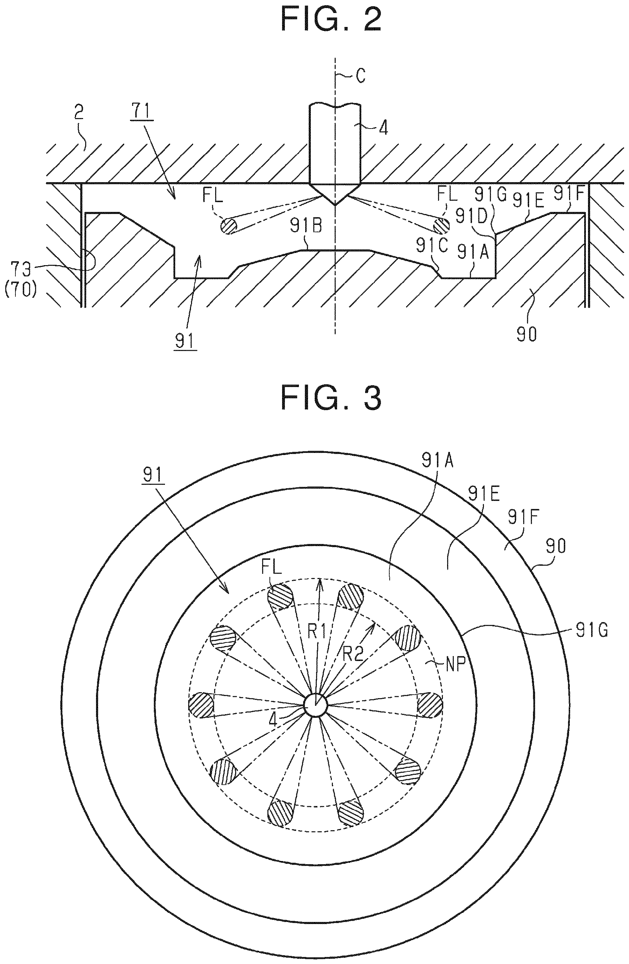

FIG. 2 illustrates a shape of a top face of the piston 90 disposed inside the cylinder 70. Note that, in the following description, an extending direction of a central axis C of the piston 90 is referred to as an up-down direction of the piston 90. Further, a direction perpendicular to the central axis C of the piston 90 is referred to as a horizontal direction of the piston 90.

In a center of the top face of the piston 90, a cavity 91 is provided in a recessed manner. The fuel is injected into the cavity 91 from the fuel injection valve 4 disposed above a center of the cavity 91. The cavity 91 is constituted by a side wall surface 91D extending downward from an opening edge 91G of the cavity 91, a bottom wall surface 91A forming a bottom face of the cavity 91, and a conular protrusion 91B that protrudes from a center of the bottom face of the cavity 91. A peripheral part of the protrusion 91B, connected to the bottom wall surface 91A, is bent toward the bottom wall surface 91A, and a part thus bent serves as a guide portion 91C. The fuel is directed from the bottom wall surface 91A toward the protrusion 91B, and then guided to upper region of the cavity 91 by the guide portion 91C.

An annular inclined surface 91E surrounding a whole circumference of the opening edge 91G is formed on an outer side of the opening edge 91G. The inclined surface 91E is inclined toward an upper side of the piston 90 from the opening edge 91G. An annular squish surface 91F expanding in the horizontal direction of the piston 90 is formed on an outer side of the inclined surface 91E.

The combustion chamber 71 in which the fuel burns is formed by a space surrounded by the cavity 91, a bottom face of the cylinder head 2, and a cylindrical cylinder bore 73 formed for each cylinder.

As illustrated in FIG. 3, fuel FL is injected into the cavity 91 radially around the fuel injection valve 4. The fuel FL thus injected spreads in a spray form and burns around a tip end of the spray, so that a combustion field NP in which the fuel burns with oxygen being taken in is formed inside the cavity 91. That is, the combustion field NP is a region where the fuel is injected to burn in the combustion chamber 71. In the present embodiment, in order to find a volume of such a combustion field NP in a simple manner, a shape of the combustion field NP is assumed a cylindrical shape coaxial with the central axis C of the piston 90, and in the following description, an outside diameter of the combustion field NP is referred to as an "outside diameter R1," and an inside diameter thereof is referred to as an "inside diameter R2."

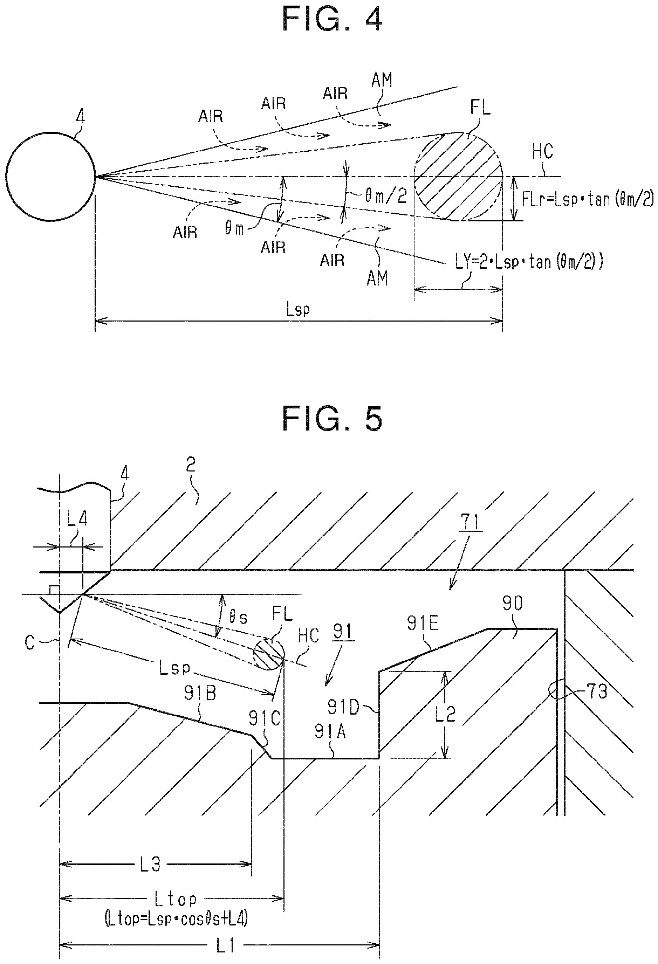

FIG. 4 illustrates a state of fuel spray injected from one of the plurality of injection holes included in the fuel injection valve 4. The fuel FL injected from the injection hole of the fuel injection valve 4 forms a dragging region AM where the air around the fuel FL is dragged and moves through the combustion chamber 71 in a spray form. A fuel spray travel distance Lsp of the fuel can be calculated from Expression (1) and Expression (2) below, which are well-known expressions (e.g., Hiroyasu's expression, a momentum theory expression of spray by Waguri et al., and the like expressions), based on an air density pa, a fuel density pf, a differential pressure $\Delta P$ between a cylinder pressure and a fuel injection pressure at the time of fuel injection, an injection hole diameter d, and a fuel injection time t.

IN CASE OF INJECTION TIME t < SPLITTING TIME tc

$$\mathrm{Lsp} = 0.39 \sqrt{\frac{2 \cdot \Delta P}{\rho f}} \cdot t \qquad \cdots \ (\,1\,)$$

IN CASE OF INJECTION TIME t ≥ SPLITTING TIME tc

$$\mathrm{Lsp} = 2.95 \cdot \left(\frac{\Delta \mathrm{P}}{\rho a}\right)^{0.25} \cdot \sqrt{d \cdot t} \qquad \cdots \ (\,2\,)$$

Note that the splitting time tc is a time until the fuel injected from the fuel injection valve 4 changes from a granular form into a spray form and is found in advance through experiments and the like.

When the fuel injection time t is less than the splitting time tc, the fuel spray travel distance Lsp can be calculated based on Expression (1). Further, when the fuel injection time t is the splitting time tc or more, the fuel spray travel distance Lsp can be calculated based on Expression (2).

Here, as seem from Expression (1) and Expression (2), as the fuel injection time t is longer or as the fuel pressure PF inside the common rail 9 is higher and the differential pressure ΔP is larger, the fuel spray travel distance Lsp is longer. In view of this, in the present embodiment, a correspondence among the fuel pressure PF, the main injection amount QM relating to a main injection period TAUm, and the fuel spray travel distance Lsp is found in advance through experiments and the like. The correspondence among them is stored as a fuel spray travel distance map in a storage device of the electronic control unit 80, and by referring to the fuel spray travel distance map, the fuel spray travel distance Lsp corresponding to the fuel pressure PF and the main injection amount QM is found.

Incidentally, instead of preparing such a fuel spray travel distance map, the fuel spray travel distance Lsp can be calculated by use of Expression (1) or Expression (2). In the meantime, the fuel FL injected from the injection hole is gathered at a tip end of the fuel spray so as to burn together with oxygen around the tip end. In this regard, an entire shape of the fuel FL gathered at the tip end is a generally spherical shape, and its radius FLr can be found as an approximation based on Expression (3) from the rule of thumb of this inventor.

$$FLr = Lsp \cdot \tan(\theta m/2) \ ... \ (3)$$

Lsp: fuel spray travel distance, $\theta m$: spray angle

The spray angle $\theta m$ in Expression (3) is an angle indicative of spread of the fuel spray, including the air dragging region AM, on the basis of a center line HC of the fuel spray.

Further, a diameter of the fuel FL gathered at the tip end of the fuel spray is hereinafter referred to as a fuel length LY. Since the fuel length LY is twice as large as the radius FLr, the fuel length LY can be expressed by Expression (4) as follows.

$$LY = 2 \cdot Lsp \cdot \tan(\theta m/2) \ ... \ (4)$$

Further, as illustrated in FIG. 5, in the following description, a distance which is a distance along the horizontal direction of the piston 90 and which is a distance from a central axis C of the piston 90 to the side wall surface 91D is referred to as a wall surface distance L1. Further, a height of the side wall surface 91D, that is, a length from the bottom wall surface 91A to the opening edge 91G in the up-down direction to the piston 90 is referred to as a wall surface height L2. Further, a distance which is a distance along the horizontal direction of the piston 90 and which is a distance from the central axis C of the piston 90 to a part, of the protrusion 91B, in which the guide portion 91C bends is referred to as a guiding distance L3. Further, a distance which is a distance along the horizontal direction of the piston 90 and which is a distance from the central axis C of the piston 90 to the injection hole of the fuel injection valve 4 is referred to as an injection hole distance L4. Further, an inclination angle of the center line HC of the fuel spray with respect to the horizontal direction of the piston 90 is referred to as an injection angle $\theta s$ of the fuel. Further, a distance which is a distance along the horizontal direction of the piston 90 and which is a distance between a forefront end of the fuel FL injected from the fuel injection valve 4 and the central axis C of the piston 90, that is, a flying distance of the fuel FL in the horizontal direction of the piston 90 is referred to as a fuel flying distance Ltop. The fuel flying distance Ltop can be expressed by Expression (5) as follows.

$$Ltop = Lsp \cdot \cos\theta s + L4 \ ... \ (5)$$

Lsp: fuel spray travel distance
$\theta s$: injection angle of fuel
L4: injection hole distance

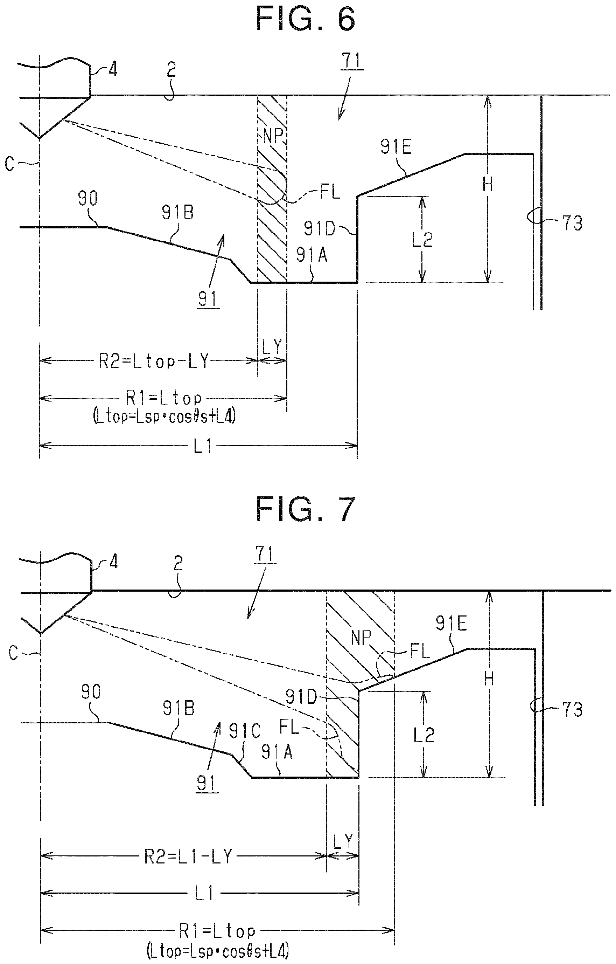

Referring now to FIGS. 6 to 8, the following describes how to find a combustion field volume NPv, which is a volume of a combustion field NP.

FIG. 6 illustrates a combustion field NP in a case where the fuel spray travel distance Lsp of the fuel FL injected from the fuel injection valve 4 is short and the fuel FL does not reach the side wall surface 91D of the cavity 91. An outside diameter R1 of the combustion field NP in the state illustrated in FIG. 6 is equal to the fuel flying distance Ltop, as shown in Expression (6) as follows.

$$R1 = Ltop \ ... \ (6)$$

An inside diameter R2 of the combustion field NP can be expressed as a value obtained by subtracting the fuel length LY from the fuel flying distance Ltop, as shown in Expression (7) as follows.

$$R2 = Ltop - LY \ ... \ (7)$$

FIG. 7 illustrates a dispersion state of the fuel FL when the fuel spray travel distance Lsp is longer than the state illustrated in FIG. 6, and also illustrates a combustion field NP in a case where the fuel FL hits the side wall surface 91D of the cavity 91, but does not spread to the bottom wall surface 91A.

In the state illustrated in FIG. 7, most of the fuel FL spreads on a surface of the side wall surface 91D, and the fuel FL partially spreads in a direction of an outer periphery of the piston 90 along the inclined surface 91E. In this case, the forefront end of the fuel FL spreading along the inclined surface 91E corresponds to the outside diameter R1, and the outside diameter R1 of the combustion field NP at this time is equal to the fuel flying distance Ltop, similarly to Expression (6). Further, an inside diameter R2 of the combustion field NP in this case is equal to a value obtained by subtracting the fuel length LY from the wall surface distance L1, as shown in Expression (8) as follows.

$$R2 = L1 - LY \ ... \ (8)$$

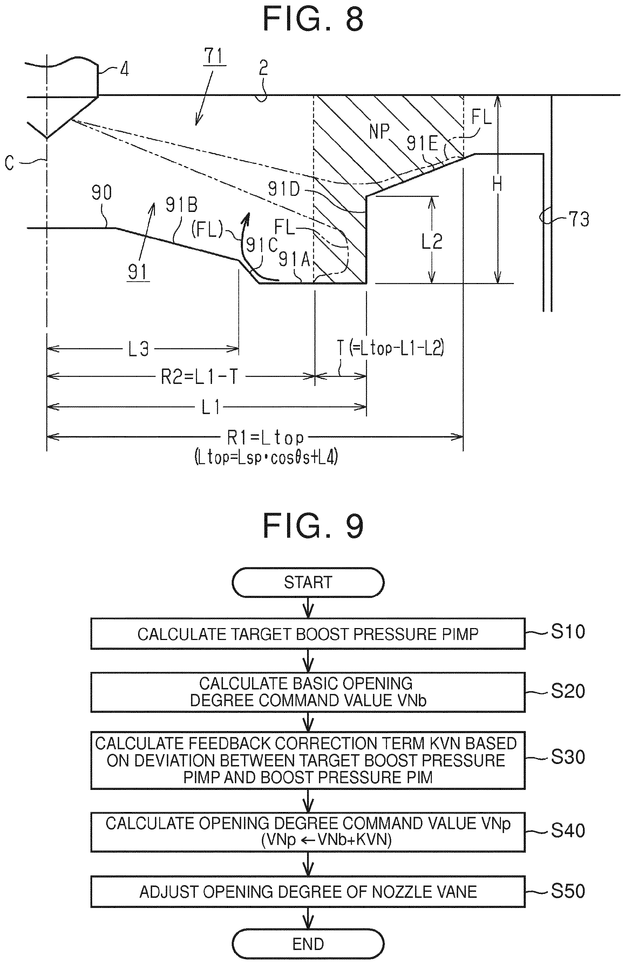

FIG. 8 illustrates a dispersion state of the fuel FL when the fuel spray travel distance Lsp is longer than the state illustrated in FIG. 7, and also illustrates a combustion field NP in a case where the fuel FL hitting the side wall surface 91D of the cavity 91 further spreads to the bottom wall surface 91A.

In the state illustrated in FIG. 8, most of the fuel FL spreads from the side wall surface 91D to the bottom wall surface 91A, and the fuel FL partially spreads in the direction of the outer periphery of the piston 90 along the inclined surface 91E. In this case, the forefront end of the fuel FL spreading along the inclined surface 91E corresponds to the outside diameter R1, and the outside diameter R1 of the combustion field NP at this time is equal to the fuel flying distance Ltop, similarly to Expression (6). Further, when a distance from the forefront end of the fuel FL spreading on the bottom wall surface 91A to the side wall surface 91D is assumed a distance T, an inside diameter R2 of the combustion field NP in this case is equal to a value obtained by subtracting the distance T from the wall surface distance L1. Here, the distance T is a value obtained by subtracting the wall surface distance L1 and the wall surface height L2 from the fuel flying distance Ltop, and therefore, the inside diameter R2 in the state illustrated in FIG. 8 is found by Expression (9).

$$R2 = L1 - (Ltop - L1 - L2) \ ... \ (9)$$

Note that, when the fuel FL thus spreading on the bottom wall surface 91A reaches the guide portion 91C, the fuel FL thus reaching the guide portion 91C is guided to upper region of the cavity 91. Accordingly, the fuel FL spreading on the bottom wall surface 91A does not spread to a center side of the piston 90 across the guide portion 91C. Accordingly, in the state illustrated in FIG. 8, the guiding distance L3 is a minimum value of the inside diameter R2.

As illustrated in FIGS. 6 to 8, the spread of the combustion field NP changes depending on the fuel spray travel distance Lsp of the fuel injected from the fuel injection valve 4. Further, when a height, in the up-down direction, of the combustion fields NP illustrated in FIGS. 6 to 8 is assumed a combustion field height H, the combustion field height H is a distance between the bottom face of the cavity 91 and the bottom face of the cylinder head 2, opposed to the bottom face of the cavity 91, and is determined by a position of the piston 90 at the time when the fuel injected by main injection starts to burn in the combustion chamber 71.

An area of a sectional shape of the combustion field NP along the central axis C of the piston 90, as illustrated in FIGS. 6 to 8, can be calculated based on the outside diameter R1, the inside diameter R2, the combustion field height H, and a shape of the piston 90. The combustion field volume NPv can be found by calculating a volume of a rotor obtained by rotating the sectional shape of the combustion field NP around the central axis C of the piston 90.

Here, as shown in Expressions (6) to (9), the outside diameter R1 and the inside diameter R2 of the combustion field NP are functions of the fuel spray travel distance Lsp. Further, the combustion field height H is a value relating to the main fuel injection timing Tm.

That is, the volume of the combustion field NP where the fuel burns changes depending on the fuel spray travel distance Lsp of the fuel injected from the fuel injection valve 4, and the position of the piston 90 at the time when the fuel thus injected starts to burn. Further, the position of the piston 90 at the time when the fuel starts to burn relates to the main fuel injection timing Tm. Accordingly, the combustion field volume NPv can be found based on the fuel spray travel distance Lsp and the main fuel injection timing Tm.

In view of this, in the present embodiment, a correspondence among the fuel spray travel distance Lsp, the main fuel injection timing Tm, and the combustion field volume NPv is found in advance through experiments and the like. The correspondence among them is stored as a combustion field volume map in the storage device of the electronic control unit 80.

Note that, instead of preparing such a combustion field volume map, the combustion field volume NPv may be found by calculating the volume of the rotor during an engine operation. (Boost Control) With reference to FIG. 9, next will be described a procedure of the boost control executed by the boost pressure controlling portion 80A of the electronic control unit 80. Note that the process illustrated in FIG. 9 is executed repeatedly every predetermined period.

When the process is started, the boost pressure controlling portion 80A calculates a target boost pressure PIMP, which is a target value of a boost pressure PIM, based on the engine load represented by the fuel injection amount Q and the like, and the engine rotation speed NE (S10).

Then, the boost pressure controlling portion 80A calculates a basic opening degree command value VNb, which is a basic value of an opening degree command value of the nozzle vane 11v, based on the engine load and the engine rotation speed NE (S20). Note that, in the present embodiment, when the opening degree command value of the nozzle vane 11v is "0%," the nozzle vane 11v is fully opened, and when the opening degree command value is "100%," the nozzle vane 11v is fully closed. Accordingly, as the opening degree command value of the nozzle vane 11v is larger, the opening degree of the nozzle vane 11v is smaller, and a passage sectional area of the exhaust passage provided with the nozzle vane 11v is narrower, which increases the boost pressure.

Subsequently, the boost pressure controlling portion 80A calculates a feedback correction term KVN based on a deviation between the target boost pressure PIMP and the boost pressure PIM (S30). The feedback correction term KVN is a well-known correction term in a PID control and is a value obtained by adding a proportional term, an integration term, and a differential term, each calculated separately, based on the deviation. Note that, when the boost pressure PIM is lower than the target boost pressure PIMP, the feedback correction term KVN is calculated so that the feedback correction term KVN is a positive value and an absolute value of the feedback correction term KVN is larger as the deviation is larger. Hereby, when the boost pressure PIM is lower than the target boost pressure PIMP, the opening degree of the nozzle vane 11v is corrected to be small, so that the boost pressure PIM is increased. Further, when the boost pressure PIM is higher than the target boost pressure PIMP, the feedback correction term KVN is calculated so that the feedback correction term KVN is a negative value and the absolute value of the feedback correction term KVN is larger as the deviation is larger. Hereby, when the boost pressure PIM exceeds the target boost pressure PIMP, the opening degree of the nozzle vane 11v is corrected to be large, so that the boost pressure PIM is decreased.

Then, the boost pressure controlling portion 80A calculates an opening degree command value VNp of the nozzle vane 11v (S40). In step S40, the boost pressure controlling portion 80A calculates a value obtained by adding the feedback correction term KVN to the basic opening degree command value VNb, so as to set the value thus calculated, as the opening degree command value VNp of the nozzle vane 11v. Then, the boost pressure controlling portion 80A adjusts the opening degree of the nozzle vane 11v based on the opening degree command value VNp (S50), and the process is finished once.

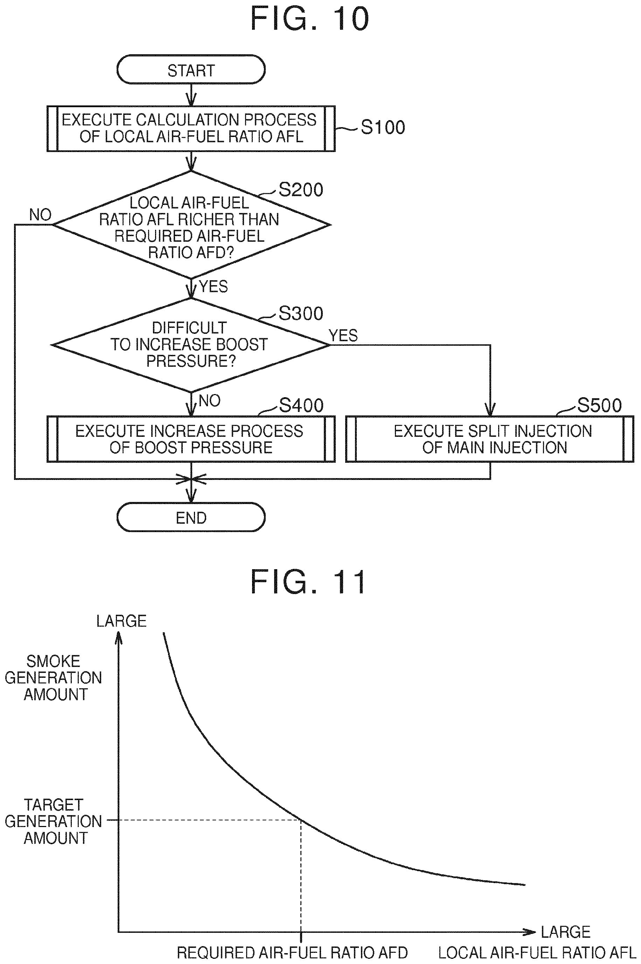

By performing such a boost control, the opening degree of the nozzle vane 11v is feedback-controlled so that the boost pressure PIM reaches the target boost pressure PIMP. (Procedure of Reducing Generation Amount of Smoke) Next will be described a series of procedures executed to reduce a generation amount of smoke in the combustion field, with reference to FIG. 10. Note that the process is executed by the electronic control unit 80 repeatedly every predetermined period.

When the process is started, the local air-fuel ratio calculating portion 80B of the electronic control unit 80 executes a calculation process of a local air-fuel ratio AFL (S100). Details of a process in step S100 will be described later. Then, the air-fuel ratio determination portion 80C of the electronic control unit 80 determines whether the local air-fuel ratio AFL thus calculated is richer than a predetermined required air-fuel ratio AFD or not, that is, whether the local air-fuel ratio AFL thus calculated is a value smaller than the required air-fuel ratio AFD or not (S200). The required air-fuel ratio AFD is the following value.

As illustrated in FIG. 11, as a value of the local air-fuel ratio AFL is larger, that is, as a mass of the air existing in the combustion field NP relative to an amount of the fuel supplied to the combustion field NP is larger, an amount of smoke to be generated in the combustion field NP is smaller. In view of this, a maximum value allowable in terms of a smoke generation amount in the combustion field NP is assumed a target generation amount of smoke, and a local air-fuel ratio AFL corresponding to the target generation amount is set as the required air-fuel ratio AFD. The required air-fuel ratio AFD thus set is an air-fuel ratio that can restrain, to an allowable amount, the generation amount of smoke in the combustion field NP.

In step S200, when it is determined that the local air-fuel ratio AFL is not richer than the required air-fuel ratio AFD (S200: NO), the electronic control unit 80 finishes the process once. In the meantime, in step S200, when it is determined that the local air-fuel ratio AFL is richer than the required air-fuel ratio AFD (S200: YES), the increase determination portion 80E of the electronic control unit 80 determines whether it is difficult to increase the boost pressure PIM or not (S300). In step S300, when the opening degree command value VNp of the nozzle vane 11v is a value corresponding to a fully closed state of the nozzle vane 11v, the increase determination portion 80E determines that it is difficult to increase the boost pressure PIM. That is, the condition for not increasing the boost pressure is a condition that the opening degree command value VNp of the nozzle vane 11v is the value corresponding to the fully closed state of the nozzle vane 11v.

In step S300, when it is determined that it is not difficult to increase the boost pressure PIM (S300: NO), the boost pressure change portion 80D of the electronic control unit 80 executes an increase process of the boost pressure PIM (S400). Details of the process in step S400 will be described later. The electronic control unit 80 finishes the process once.

In the meantime, in step S300, when it is determined that it is difficult to increase the boost pressure PIM (S300: YES), the split injection portion 80F of the electronic control unit 80 executes the split injection of the main injection such that the main injection amount QM is divided to be injected several times (S500). In step S500, the main injection is changed from a single injection to the split injection. The split injection of the main injection in the present embodiment is performed such that the main injection is performed in a divided manner into two times or three times depending on an amount of the main injection amount QM. Details of the process in step S500 will be described later. The electronic control unit 80 finishes the process once.

Calculation Process of Local Air-Fuel Ratio

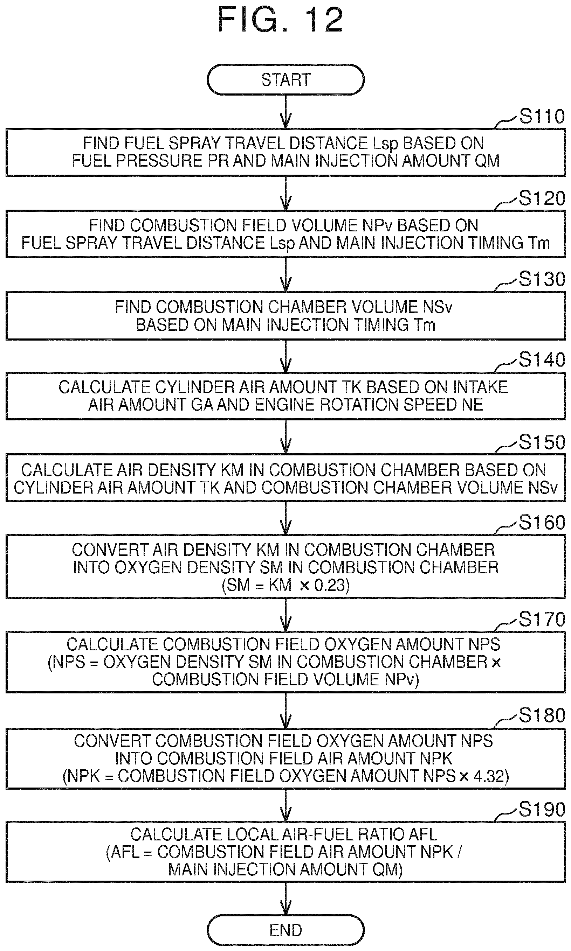

Next will be described the calculation process of the local air-fuel ratio AFL in step S100, with reference to FIG. 12.

As illustrated in FIG. 12, when the process is started, the local air-fuel ratio calculating portion 80B of the electronic control unit 80 finds a fuel spray travel distance Lsp based on a present fuel pressure PF and the main injection amount QM, with reference to the fuel spray travel distance map (S110).

Subsequently, the local air-fuel ratio calculating portion 80B finds a combustion field volume NPv based on the fuel spray travel distance Lsp and the main fuel injection timing Tm, with reference to the combustion field volume map (S120). Then, the local air-fuel ratio calculating portion 80B finds a combustion chamber volume NSv based on the main fuel injection timing Tm (S130). The combustion chamber volume NSv is a volume of the combustion chamber 71 at the time when the fuel injected by the main injection starts to burn. A correspondence between the main fuel injection timing Tm and the combustion chamber volume NSv is found in advance through experiments and the like. The correspondence therebetween is stored in the storage device of the electronic control unit 80 as a combustion chamber volume map, and in step S130, the combustion chamber volume NSv is found with reference to the combustion chamber volume map.

Subsequently, the local air-fuel ratio calculating portion 80B calculates a cylinder air amount TK, which is an amount of the air taken into one cylinder by one stroke of the piston 90, based on the intake-air amount GA and the engine rotation speed NE (S140).

Then, the local air-fuel ratio calculating portion 80B calculates an air density KM in the combustion chamber 71 based on the combustion chamber volume NSv and the cylinder air amount TK (S150). Herein, the air density KM in the combustion chamber 71 is calculated by dividing the cylinder air amount TK (a mass) by the combustion chamber volume NSv.

Then, the local air-fuel ratio calculating portion 80B converts the air density KM in the combustion chamber 71 into an oxygen density SM (S160). Respective mass percentages of nitrogen and oxygen in the air are generally 75.524% (nitrogen) and 23.139% (oxygen). Accordingly, a mass ratio of oxygen in the air is about "0.23." In view of this, in step S160, an oxygen density SM in the combustion chamber 71 is calculated by multiplying the air density KM in the combustion chamber 71 by "0.23."

Subsequently, the local air-fuel ratio calculating portion 80B calculates a combustion field oxygen amount NPS, which is an amount (mass) of oxygen existing in the combustion field NP (S170). Herein, the combustion field oxygen amount NPS is calculated by multiplying the oxygen density SM in the combustion chamber 71 by the combustion field volume NPv.

Then, the local air-fuel ratio calculating portion 80B converts the combustion field oxygen amount NPS into a combustion field air amount NPK, which is an air amount (mass) of the combustion field NP (S180). As described above, the mass percentage of oxygen in the air is generally 23.139%. Accordingly, a value obtained by dividing "100%" by "23.139%" is about "4.23," and herein, the combustion field air amount NPK is calculated by multiplying "the combustion field oxygen amount NPS by 4.23."

Subsequently, the local air-fuel ratio calculating portion 80B calculates an air-fuel ratio in the combustion field NP, that is, the local air-fuel ratio AFL by dividing the combustion field air amount NPK (mass) by the main injection amount QM (mass) (S190), and finishes the process.

Increase Process of Boost Pressure

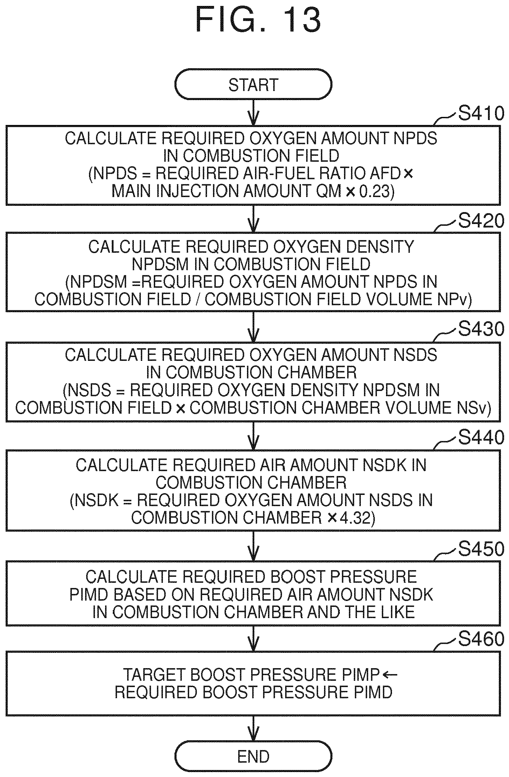

Next will be described an increase process of the boost pressure PIM in step S400, with reference to FIG. 13.

As illustrated in FIG. 13, when the process is started, the boost pressure change portion 80D of the electronic control unit 80 calculates a required oxygen amount NPDS in the combustion field NP (S410). The required oxygen amount NPDS in the combustion field NP is an oxygen amount (mass) necessary to reduce the generation amount of smoke in the combustion field NP to the target generation amount, and corresponds to an oxygen amount in the combustion field NP at the time when the local air-fuel ratio AFL is the required air-fuel ratio AFD. The required oxygen amount NPDS in the combustion field NP is calculated by multiplying the required air-fuel ratio AFD by the main injection amount QM and "0.23," which is a mass ratio of oxygen in the air.

Subsequently, the boost pressure change portion 80D calculates a required oxygen density NPDSM in the combustion field NP (S420). Herein, the required oxygen density NPDSM in the combustion field NP is calculated by dividing the required oxygen amount NPDS in the combustion field NP by the combustion field volume NPv read in step S120 illustrated in FIG. 12.

Subsequently, the boost pressure change portion 80D calculates a required oxygen amount NSDS in the combustion chamber 71 (S430). The required oxygen amount NSDS in the combustion chamber 71 is an oxygen amount in the combustion chamber 71, which is required for the oxygen amount in the combustion field NP to reach the required oxygen amount NPDS when it is assumed that the distribution of the oxygen amount in the combustion chamber 71 is uniform. In step S430, the required oxygen amount NSDS in the combustion chamber 71 is calculated by multiplying the required oxygen density NPDSM in the combustion field NP by the combustion chamber volume NSv read in step S130 illustrated in FIG. 12.

Subsequently, the boost pressure change portion 80D calculates a required air amount NSDK in the combustion chamber 71 (S440). Herein, the required air amount NSDK in the combustion chamber 71 is calculated by multiplying the required oxygen amount NSDS in the combustion chamber 71 by 4.23."

Then, the boost pressure change portion 80D calculates a required boost pressure PIMD by use of Expression (10) based on the required air amount NSDK in the combustion chamber 71, and the like (S450).

$$PIMD = \{Gcy \cdot R \cdot Tb \cdot ((2.60) / (\eta Vb \cdot ED \cdot NE))\} - Patm \ ... \ (10)$$

Gcy: cylinder gas amount (Gcy = required air amount NSDK + EGR amount EA)
R: gas constant (fixed value)
Tb: intake temperature
$\eta$Vb: volumetric efficiency (specific value in the engine 1)
ED: displacement of the engine 1
NE: engine rotation speed
Patm: atmospheric pressure (detected by an atmospheric pressure sensor (not shown))

The cylinder gas amount Gcy is an amount of gas taken into one cylinder by one stroke of the piston 90, and is a value obtained by adding the EGR amount EA to the required air amount NSDK in the combustion chamber 71.

The EGR amount EA added at the time of the calculation of the cylinder gas amount Gcy is an EGR amount in a state where the required air amount NSDK is secured at a present EGR rate and is calculated based on Expression (11).

$$EA = (\text{Required Air Amount NSDK} \times \text{Present EGR rate}) / (100 - \text{Present EGR rate}) \ ... \ (11)$$

Note that the present EGR rate is estimated based on the opening degree of the EGR valve, the opening degree of the intake throttle valve 16, the present boost pressure PIM, and the like, by a process different from this process.

Further, the intake temperature Tb is a temperature of the intake air flowing into the combustion chamber 71 and is calculated based on Expression (12) as follows.

$$Tb = \{THAE \cdot (NSDK/Gcy)\} + \{THEGR \cdot (EA/Gcy)\} \ ... \ (12)$$

THAE: outlet air temperature (temperature of the air having passed through the intercooler 18)
NSDK: required air amount

Gcy: cylinder gas amount
THEGR: outlet EGR temperature (temperature of the EGR gas having passed through the EGR cooler 14)
EA: EGR amount found from Expression (11)

Subsequently, the boost pressure change portion 80D sets the required boost pressure PIMD thus calculated in step S450 as a target boost pressure PIMP (S460), and finishes the process.

When the required boost pressure PIMD is set as the target boost pressure PIMP as such, the opening degree of the nozzle vane 11v is feedback-controlled through the aforementioned boost control, so that the boost pressure PIM reaches the required boost pressure PIMD, thereby increasing the boost pressure PIM.

Split Injection of Main Injection

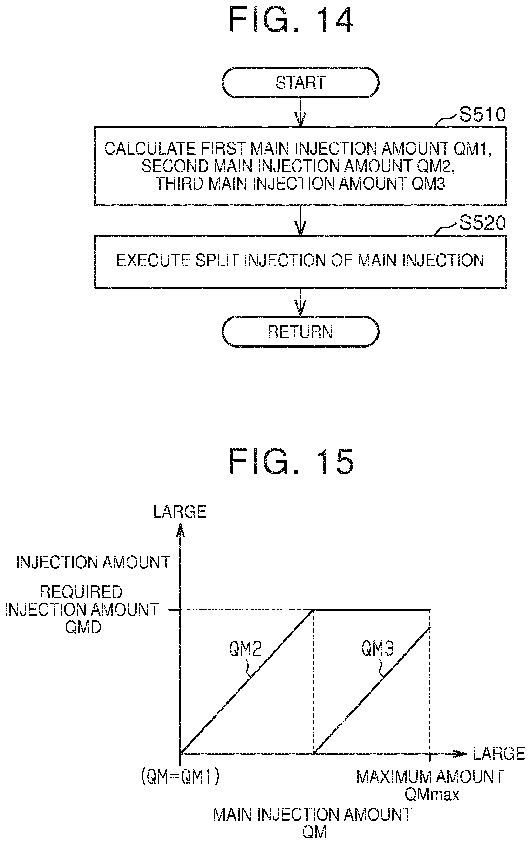

Next will be described a split process of the main injection in step S500, with reference to FIGS. 14 and 15.

As illustrated in FIG. 14, when the process is started, the split injection portion 80F of the electronic control unit 80 sets a first main injection amount QM1, a second main injection amount QM2, and a third main injection amount QM3 (S510). The first main injection amount QM1 is a fuel injection amount at the time of a first main injection performed first in the main injection. The second main injection amount QM2 is a fuel injection amount at the time of a second main injection performed at a timing on a retard side relative to the first main injection in the main injection. Then, the third main injection amount QM3 is a fuel injection amount at the time of a third main injection performed at a timing on a retard side relative to the second main injection in the main injection.

The first main injection amount QM1 is set so that the air-fuel ratio in the combustion field NP becomes a split required air-fuel ratio AFDDV. The split required air-fuel ratio AFDDV is a value that determines a maximum air-fuel ratio at the time of each injection so that a sum total of smoke amounts generated at the time of respective injections from the first main injection to the third main injection becomes equal to a target generation amount of smoke, and an appropriate value is set in advance through experiments and the like. In other words, an air-fuel ratio that can reduce a generation amount of smoke at the time of each of the injections is set to the split required air-fuel ratio AFDDV, so that respective smoke amounts generated at the time of the injections from the first main injection to the third main injection are smaller than an amount of smoke generated at the time when the air-fuel ratio in the combustion field NP is the required air-fuel ratio AFD. Accordingly, the split required air-fuel ratio AFDDV is a value larger than the required air-fuel ratio AFD, that is, a value closer to lean.

By dividing the combustion field air amount NPK by the split required air-fuel ratio AFDDV, the first main injection amount QM1 is found (QM1 = NPK/AFDDV). The second main injection amount QM2 is injected at a timing on the retard side relative to the first main injection in the main injection, and further the second main injection amount QM2 and the third main injection amount QM3 are set based on the main injection amount QM with reference to an injection amount map which is a map set in advance through experiments and the like and which is stored in advance in the electronic control unit 80.

FIG. 15 illustrates a setting mode of the second main injection amount QM2 and the third main injection amount QM3 by the injection amount map. Note that a required injection amount QMD illustrated in FIG. 15 is a fuel injection amount at the time when an air-fuel ratio, in the combustion field, of the fuel injected by the second main injection, or an air-fuel ratio, in the combustion field, of the fuel injected by the third main injection reaches the split required air-fuel ratio AFDDV, and an appropriate value is found in advance through experiments and the like. Incidentally, if a sum total of smoke generation amounts of respective injections in the split injection is equal to the target generation amount of smoke, the first main injection, the second main injection, and the third main injection may have different split required air-fuel ratios AFDDV.

As illustrated in FIG. 15, when the main injection amount QM is not more than the first main injection amount QM1, the second main injection amount QM2 is set to "0." When the main injection amount QM is more than the first main injection amount QM1, the second main injection amount QM2 gradually increases along with an increase of the main injection amount QM. When the second main injection amount QM2 reaches the required injection amount QMD, the second main injection amount QM2 is fixed to the required injection amount QMD after that even if the main injection amount QM increases. In the meantime, when the second main injection amount QM2 reaches the required injection amount QMD, the third main injection amount QM3 set to "0" till then gradually increases along with the increase of the main injection amount QM. Note that the required injection amount QMD and the third main injection amount QM3 are set appropriately so that a sum total of the first main injection amount QM1, the required injection amount QMD as a maximum value of the second main injection amount QM2, and the third main injection amount QM3 does not exceed a maximum value QMmax of the main injection amount QM.

By setting the first main injection amount QM1, the second main injection amount QM2, and the third main injection amount QM3 as such, the main injection is divided into two times until the second main injection amount QM2 reaches the required injection amount QMD. After the second main injection amount QM2 reaches the required injection amount QMD, the main injection is divided into three times.

When the first main injection amount QM1, the second main injection amount QM2, and the third main injection amount QM3 are set, the split injection portion 80F of the electronic control unit 80 executes the split injection of the main injection by performing the injections from the first main injection to the third main injection at respective fuel injection timings set based on the engine rotation speed NE, and the like (S520). Note that, when the third main injection amount QM3 is set to "0," the split injection of the main injection is executed by performing the first main injection and the second main injection in step S520. Then, the process is finished.

With the present embodiment described above, it is possible to obtain the following effects. A) The local air-fuel ratio AFL, which is an air-fuel ratio in the combustion field NP, is found (step S100 in FIG. 10). When it is determined that the local air-fuel ratio AFL is an air-fuel ratio richer than the required air-fuel ratio AFD (step S200 in FIG. 10: YES), that is, when the oxygen amount in the combustion field NP is insufficient with respect to the required oxygen amount NPDS, it is determined whether it is difficult to increase the boost pressure PIM (step S300 in FIG. 10). When it is possible to increase the boost pressure PIM (step S300 in FIG. 10: NO), the increase process of the boost pressure PIM is performed (step S400 in FIG. 10).

In the increase process of the boost pressure PIM, the required boost pressure PIMD necessary to increase the oxygen amount in the combustion field NP to the required oxygen amount NPDS is calculated (step S410 to step S450 in FIG. 13). The required boost pressure PIMD thus calculated is set as the target boost pressure PIMP (step S460 in FIG. 13). As such, when the required boost pressure PIMD to compensate an insufficient oxygen amount is set as the target boost pressure PIMP as such, a target boost pressure PIMP (= the required boost pressure PIMD) after the change becomes a value higher than the target boost pressure PIMP at the time when it is determined that the oxygen amount is insufficient, thereby resulting in that the boost pressure PIM increases. When the boost pressure PIM is increased as such, the oxygen amount in the combustion field NP also increases due to an increase in an amount of the air flowing into the combustion chamber 71, thereby making it possible to reduce the amount of smoke to be generated due to oxygen deficiency in the combustion field NP. Further, since the increase of the boost pressure PIM is attained by calculating the required boost pressure PIMD, the boost pressure PIM is increased as much as the oxygen deficiency in the combustion field NP. Accordingly, it is possible to compensate the oxygen deficiency in the combustion field NP appropriately.

B) When the boost pressure cannot be increased (step S300 in FIG. 10: NO), the split injection of the main injection is performed. When the split injection is performed as such, the temperature in the combustion chamber 71 first increases due to burning of the fuel injected by the first main injection. Accordingly, the fuel injected by the second main injection burns immediately after the fuel injected from the fuel injection valve 4. That is, in comparison with the fuel injected by the first main injection, the fuel injected by the second main injection buns at a position closer to the fuel injection valve 4, so a combustion field for the fuel injected by the second main injection is different from a combustion field for the fuel injected by the first main injection. Accordingly, the fuel injected by the first main injection and the fuel injected by the second main injection burn in respective regions where a sufficient oxygen amount is secured. On this account, in the combustion field where the fuel injected by the first main injection burns and the combustion field where the fuel injected by the second main injection burns, it is possible to reduce the amount of smoke to be generated due to the oxygen deficiency.

Similarly, since the temperature in the combustion chamber 71 further increases due to burning of the fuel injected by the second main injection, the fuel injected by the third main injection burns further immediately after the injection from the fuel injection valve 4. That is, in comparison with the fuel injected by the second main injection, the fuel injected by the third main injection burns at a position closer to the fuel injection valve 4, a combustion field for the fuel injected by the third main injection is different from the combustion field for the fuel injected by the second main injection. Accordingly, the fuel injected by the third main injection also burns in a region where a sufficient oxygen amount is secured. On this account, in the combustion field where the fuel injected by the third main injection burns, it is also possible to reduce the amount of smoke to be generated due to the oxygen deficiency.

C) Since the generation amount of smoke in the combustion fields inside the combustion chamber 71 can be reduced, an amount of the PM including smoke as a component also decreases. Accordingly, various effects due to the decrease in such a PM amount can be also provided.

For example, since an amount of the PM collected by the filter 32 per unit time decreases, a regeneration period of the filter 32 becomes longer. When the regeneration period of the filter 32 becomes longer, the number of times of regeneration of the filter 32 decreases, thereby making it possible to reduce an amount of the fuel necessary to regenerate the filter 32. Further, an increase of a pressure loss of the filter 32 due to accumulation of the PM is also restrained, thereby making it also possible to restrain fuel consumption to compensate a decrease of an engine output due to such a pressure loss. Further, a phenomenon that the filter 32 clogs up with the PM attached to an upstream end surface of the filter 32, that is, a so-called end surface clogging hardly occurs, thereby making it possible to extend the working life of the filter 32.

The foregoing embodiments may also be carried out by adding changes as stated below. In the increase process of the boost pressure PIM, the required boost pressure PIMD necessary to increase the oxygen amount in the combustion field NP to the required oxygen amount NPDS is calculated, and the required boost pressure PIMD thus calculated is set as the target boost pressure PIMP, so as to increase the boost pressure PIM. Alternatively, as a simpler configuration, the boost pressure PIM may be increased by adding a predetermined value determined in advance to the target boost pressure PIMP calculated in the process of step S10 in FIG. 9. Even in this case, the oxygen amount in the combustion field NP also increases due to an increase in an amount of the air flowing into the combustion chamber 71, thereby making it possible to restrain the generation of smoke due to oxygen deficiency in the combustion field NP.

The main injection is divided into three times at the maximum, but a maximum value of the number of times of division can be changed appropriately. When the boost pressure cannot be increased (step S300 in FIG. 10: NO), the split injection of the main injection is executed, but such a split injection may be omitted. That is, the processes of step S300 and step S500 illustrated in FIG. 10 may be omitted, and when an affirmative determination is made in step S200, the process of step S400 may be executed as the subsequent process. Even in this case, it is possible to yield the effects other than (B).

The second main injection amount QM2 and the third main injection amount QM3 are set by use of the injection amount map. Alternatively, the air-fuel ratio in the combustion field for the fuel injected in the second main injection or the air-fuel ratio in the combustion field for the fuel injected in the third main injection may be actually calculated during the engine operation similarly to the local air-fuel ratio AFL, and the second main injection amount QM2 or the third main injection amount QM3 may be calculated so that the air-fuel ratio thus calculated becomes the split required air-fuel ratio AFDDV.

The engine 1 may be a diesel engine. Alternatively, the embodiment and its modifications can be applied to any compression self-ignition internal combustion engine including a fuel injection valve that directly injects fuel into a combustion chamber.

**Claims**

1. A control device for an internal combustion engine (1), the internal combustion engine (1) being a compression self-ignition internal combustion engine, the internal combustion engine (1) comprising:

    a supercharger (11);
    a fuel injection valve (4);
    an intake passage (3); and
    an intake-air amount sensor (19) provided in the intake passage and configured to detect an amount of air entering the combustion chamber (71),

       the supercharger (11) being a variable-capacity supercharger including a movable vane (11v),
       the fuel injection valve (4) being configured to directly inject fuel into a combustion chamber (71) of the internal combustion engine (1),

    the control device comprising
    an electronic control unit (80) configured to:

       control a boost pressure of intake air by adjusting an opening degree of the movable vane (11v);
       calculate a local air-fuel ratio (AFL), the local air-fuel ratio (AFL) being an air-fuel ratio in a combustion field (NP), the combustion field (NP) being a field where the fuel is injected from the fuel injection valve (4) in the combustion chamber (71);
       determine whether or not the local air-fuel ratio (AFL) is a predetermined required air-fuel ratio;
       execute a control to increase the boost pressure, when the electronic control unit (80) determines that the local air-fuel ratio (AFL) is richer than the predetermined required air-fuel ratio;
       calculate a volume (NPv) of the combustion field (NP) based on a fuel spray travel distance (Lsp) of the fuel injected to the combustion field (NP) and an injection timing of the fuel;
       calculate a combustion field air amount (NPK) based on the amount of the air detected by the intake-air amount sensor (19), the combustion field air amount (NPK) is an air amount in the volume (NPv) of the combustion field (NP);
       calculate the local air-fuel ratio (AFL) by calculating a ratio of the combustion field air amount (NPK) to an amount of the fuel injected to the combustion field (NP) wherein the calculated local air-fuel ratio (AFL) is an air-fuel ratio in the combustion field (NP) during execution of a main injection; and
       execute multistage injection from the fuel injection valve (4), wherein

the main injection is an injection with a largest injection amount in the multistage injection;

when the electronic control unit (80) determines that the local air-fuel ratio (AFL) is richer than the predetermined required air-fuel ratio, the electronic control unit (80) is configured to determine whether or not a condition for not increasing the boost pressure is satisfied; and

when the electronic control unit (80) determines that the condition for not increasing the boost pressure is satisfied, the electronic control unit (80) is configured to change the main injection from a single injection to a split injection.

**2.** The control device according to claim 1, wherein:

the electronic control unit (80) is configured to:

set a target boost pressure based on an operating state of the internal combustion engine (1);
control the boost pressure so as to reach the target boost pressure; and
change the target boost pressure such that the oxygen amount in the combustion field (NP) reaches a required oxygen amount when an oxygen amount in the combustion field (NP) is assumed to have a uniform distribution at a time when the local air-fuel ratio (AFL) is the predetermined required air-fuel ratio.

**3.** A control method for an internal combustion engine (1), the internal combustion engine (1) being a compression self-ignition internal combustion engine, the internal combustion engine (1) being configured to be controlled by an electronic control unit (80), the internal combustion engine (1) including a supercharger (11) and a fuel injection valve (4),

the supercharger (11) being a variable-capacity supercharger including a movable vane (11v),

the fuel injection valve (4) being configured to directly inject fuel into a combustion chamber (71) of the internal combustion engine (1),

the control method comprising:

controlling a boost pressure of intake air by adjusting an opening degree of the movable vane (11v);
calculating a local air-fuel ratio (AFL), the local air-fuel ratio (AFL) being an air-fuel ratio in a combustion field (NP), the combustion field (NP) being a field where the fuel is injected from the fuel injection valve (4) in the combustion chamber (71);
determining whether or not the local air-fuel ratio (AFL) is richer than a predetermined required air-fuel ratio; and
increasing the boost pressure, when the electronic control unit (80) determines that the local air-fuel ratio (AFL) is richer than the predetermined required air-fuel ratio
calculating a volume (NPv) of the combustion field (NP) based on a fuel spray travel distance (Lsp) of the fuel injected to the combustion field (NP) and an injection timing of the fuel;
calculating a combustion field air amount (NPK) based on the amount of the air detected by an intake-air amount sensor (19), the combustion field air amount (NPK) is an air amount in the volume (NPv) of the combustion field (NP);
calculating the local air-fuel ratio (AFL) by calculating a ratio of the combustion field air amount (NPK) to an amount of the fuel injected to the combustion field (NP) wherein the calculated local air-fuel ratio (AFL) is an air-fuel ratio in the combustion field (NP) during execution of a main injection; and
executing multistage injection from the fuel injection valve (4), wherein
the main injection is an injection with a largest injection amount in the multistage injection;
when the electronic control unit (80) determines that the local air-fuel ratio (AFL) is richer than the predetermined required air-fuel ratio, determining whether or not a condition for not increasing the boost pressure is satisfied; and
when the electronic control unit (80) determines that the condition for not increasing the boost pressure is satisfied, changing the main injection from a single injection to a split injection.

**Patentansprüche**

**1.** Steuerungsvorrichtung für einen Verbrennungsmotor (1), wobei der Verbrennungsmotor (1) ein Kompressions-Selbstzünder-Verbrennungsmotor ist, wobei der Verbrennungsmotor (1) umfasst:

einen Verdrängerlader (11);
ein Kraftstoffeinspritzventil (4);
einen Ansaugkanal (3); und
einen Ansaugluftmengensensor (19), der im Ansaugkanal bereitgestellt und dafür ausgelegt ist, eine Menge an Luft zu erkennen, die in die Brennkammer (71) eintritt, wobei der Verdrängerlader (11) ein Verdrängerlader mit variabler Kapazität ist, der einen beweglichen Flügel (11v) aufweist,
wobei das Kraftstoffeinspritzventil (4) dafür ausgelegt ist, Kraftstoff direkt in eine Brennkammer (71) des Verbrennungsmotors (1) einzuspritzen,
wobei die Steuerungsvorrichtung umfasst:
eine elektronische Steuerungseinheit (80), die dafür ausgelegt ist:

einen Ladedruck der Ansaugluft zu regeln, indem ein Öffnungsgrad des beweglichen Flügels (11v) eingestellt wird;
ein lokales Luft-/Kraftstoff-Verhältnis (Air-Fuel Ratio, AFL) zu berechnen, wobei das lokale Luft-/Kraftstoff-Verhältnis (AFL) ein Luft-/KraftstoffVerhältnis in einem Brennfeld (NP) ist, wobei das Brennfeld (NP) ein Feld, in dem Kraftstoff vom Kraftstoffeinspritzventil (4) eingespritzt wird, in der Brennkammer (71) ist;
zu bestimmen, ob das lokale Luft-/Kraftstoff-Verhältnis (AFL) ein vorbestimmtes erforderliches Luft-/Kraftstoff-Verhältnis ist oder nicht;
eine Regelung zum Erhöhen des Ladedrucks auszuführen, wenn die elektronische Steuerungseinheit (80) bestimmt, dass das lokale Luft-/Kraftstoff-Verhältnis (AFL) fetter als das vorbestimmte erforderliche Luft-/Kraftstoff-Verhältnis ist;
ein Volumen (NPv) des Brennfeldes (NP) basierend auf einer Kraftstoffnebel-Sprühdistanz (Lsp) des in das Brennfeld (NP) eingespritzten Kraftstoffs und einem Einspritzzeitpunkt des Kraftstoffs zu berechnen;
eine Brennfeldluftmenge (NPK) basierend auf der Menge an Luft, die durch den Ansaugluftmengensensor (19) erkannt wird, zu berechnen, wobei die Brennfeldluftmenge (NPK) eine Luftmenge im Volumen (NPv) des Brennfeldes (NP) ist;
das lokale Luft-/Kraftstoff-Verhältnis (AFL) zu berechnen, indem ein Verhältnis der Brennfeldluftmenge (NPK) zu einer Menge des in das Brennfeld (NP) eingespritzten Kraftstoffs berechnet wird, wobei das berechnete lokale Luft-/Kraftstoff-Verhältnis (AFL) ein Luft-/Kraftstoff-Verhältnis im Brennfeld (NP) während der Ausführung einer Haupteinspritzung ist; und
eine mehrstufige Einspritzung vom Kraftstoffeinspritzventil (4) auszuführen, wobei die Haupteinspritzung eine Einspritzung mit einer größten Einspritzmenge in der mehrstufigen Einspritzung ist;

wenn die elektronische Steuerungseinheit (80) bestimmt, dass das lokale Luft-/Kraftstoff-Verhältnis (AFL) fetter als das vorbestimmte erforderliche Luft-/Kraftstoff-Verhältnis ist, ist die elektronische Steuerungseinheit (80) dafür ausgelegt zu bestimmen, ob eine Bedingung dafür, den Ladedruck nicht zu erhöhen, erfüllt ist oder nicht; und
wenn die elektronische Steuerungseinheit (80) bestimmt, dass die Bedingung dafür, den Ladedruck nicht zu erhöhen, erfüllt ist, ist die elektronische Steuerungseinheit (80) dafür ausgelegt, die Haupteinspritzung von einer Einzeleinspritzung auf eine Mehrfacheinspritzung umzustellen.

2. Steuerungsvorrichtung gemäß Anspruch 1, wobei:
die elektronische Steuerungseinheit dafür ausgelegt ist:

einen Sollladedruck basierend auf einem Betriebszustand des Verbrennungsmotors (1) einzustellen;
den Ladedruck derart zu regeln, dass der Sollladedruck erreicht wird; und
den Sollladedruck derart zu ändern, dass die Sauerstoffmenge im Brennfeld (NP) eine erforderliche Sauerstoffmenge erreicht, wenn angenommen wird, dass zu einem Zeitpunkt, wenn das lokale Luft-/KraftstoffVerhältnis (AFL) dem vorbestimmten erforderlichen Luft-/Kraftstoff-Verhältnis entspricht, eine Sauerstoffmenge im Brennfeld (NP) eine gleichmäßige Verteilung aufweist.

3. Steuerungsverfahren für einen Verbrennungsmotor (1), wobei der Verbrennungsmotor (1) ein Kompressions-Selbstzünder-Verbrennungsmotor ist, wobei der Verbrennungsmotor (1) dafür ausgelegt ist, durch eine elektronische Steuerungseinheit (80) gesteuert zu werden, wobei der Verbrennungsmotor (1) einen Verdrängerlader (11) und ein Kraftstoffeinspritzventil (4) aufweist,
wobei der Verdrängerlader (11) ein Verdrängerlader mit variabler Kapazität ist, der einen beweglichen Flügel (11v) aufweist,
wobei das Kraftstoffeinspritzventil (4) dafür ausgelegt ist, Kraftstoff direkt in eine Brennkammer (71) des Verbrennungsmotors (1) einzuspritzen,
wobei das Steuerungsverfahren umfasst:

einen Ladedruck der Ansaugluft zu regeln, indem ein Öffnungsgrad des beweglichen Flügels (11v) eingestellt wird;

ein lokales Luft-/Kraftstoff-Verhältnis (Air-Fuel Ratio, AFL) zu berechnen, wobei das lokale Luft-/Kraftstoff-Verhältnis (AFL) ein Luft-/KraftstoffVerhältnis in einem Brennfeld (NP) ist, wobei das Brennfeld (NP) ein Feld, in dem Kraftstoff vom Kraftstoffeinspritzventil (4) eingespritzt wird, in der Brennkammer (71) ist;

zu bestimmen, ob das lokale Luft-/Kraftstoff-Verhältnis (AFL) fetter als ein vorbestimmtes erforderliches Luft-/Kraftstoff-Verhältnis ist oder nicht; und

den Ladedruck zu erhöhen, wenn die elektronische Steuerungseinheit (80) bestimmt, dass das lokale Luft-/Kraftstoff-Verhältnis (AFL) fetter als das vorbestimmte erforderliche Luft-/Kraftstoff-Verhältnis ist;

ein Volumen (NPv) des Brennfeldes (NP) basierend auf einer Kraftstoffnebel-Sprühdistanz (Lsp) des in das Brennfeld (NP) eingespritzten Kraftstoffs und einem Einspritzzeitpunkt des Kraftstoffs zu berechnen;

eine Brennfeldluftmenge (NPK) basierend auf der Menge an Luft, die durch den Ansaugluftmengensensor (19) erkannt wird, zu berechnen, wobei die Brennfeldluftmenge (NPK) die Luftmenge im Volumen (NPv) des Brennfeldes (NP) ist;

das lokale Luft-/Kraftstoff-Verhältnis (AFL) zu berechnen, indem ein Verhältnis der Brennfeldluftmenge (NPK) zu einer Menge des in das Brennfeld (NP) eingespritzten Kraftstoffs berechnet wird, wobei das berechnete lokale Luft-/Kraftstoff-Verhältnis (AFL) ein Luft-/Kraftstoff-Verhältnis im Brennfeld (NP) während der Ausführung einer Haupteinspritzung ist; und

eine mehrstufige Einspritzung vom Kraftstoffeinspritzventil (4) auszuführen, wobei die Haupteinspritzung eine Einspritzung mit einer größten Einspritzmenge in der mehrstufigen Einspritzung ist;

wenn die elektronische Steuerungseinheit (80) bestimmt, dass das lokale Luft-/Kraftstoff-Verhältnis (AFL) fetter als das vorbestimmte erforderliche Luft-/Kraftstoff-Verhältnis ist, zu bestimmen, ob eine Bedingung dafür, den Ladedruck nicht zu erhöhen, erfüllt ist oder nicht; und

wenn die elektronische Steuerungseinheit (80) bestimmt, dass die Bedingung dafür, den Ladedruck nicht zu erhöhen, erfüllt ist, die Haupteinspritzung von einer Einzeleinspritzung auf eine Mehrfacheinspritzung umzustellen.

## Revendications

1. Dispositif de commande pour un moteur à combustion interne (1), le moteur à combustion interne (1) étant un moteur à combustion interne à autoallumage par compression, le moteur à combustion interne (1) comprenant :

un surcompresseur (11) ;
une soupape d'injection de carburant (4) ;
un passage d'admission (3) ; et
un capteur de quantité d'air d'admission (19) disposé dans le passage d'admission et configuré pour détecter une quantité d'air entrant dans la chambre de combustion (71),

le surcompresseur (11) étant un surcompresseur à capacité variable comportant une aube mobile (11v),
la soupape d'injection de carburant (4) étant configurée pour injecter directement du carburant dans une chambre de combustion (71) du moteur à combustion interne (1),

le dispositif de commande comprenant
une unité de commande électronique (80) configurée pour :

réguler une pression de suralimentation en air d'admission en réglant un degré d'ouverture de l'aube mobile (11v) ;
calculer un rapport air/carburant (AFL) local, le rapport air/carburant (AFL) local étant un rapport air/carburant dans une zone de combustion (NP), la zone de combustion (NP) étant une zone où le carburant est injecté depuis la soupape d'injection de carburant (4) dans la chambre de combustion (71) ;
déterminer si le rapport air/carburant (AFL) local est un rapport air/carburant nécessaire prédéterminé ou non ;
exécuter une commande pour augmenter la pression de suralimentation, quand l'unité de commande électronique (80) détermine que le rapport air/carburant (AFL) local est plus riche que le rapport air/carburant nécessaire prédéterminé ;
calculer un volume (NPv) de la zone de combustion (NP) en se basant sur une distance de parcours de jet de carburant (Lsp) du carburant injecté vers la zone de combustion (NP) et un moment d'injection du carburant ;

calculer une quantité d'air de zone de combustion (NPK) en se basant sur la quantité de l'air détecté par le capteur de quantité d'air d'admission (19), la quantité d'air de zone de combustion (NPK) étant une quantité d'air dans le volume (NPv) de la zone de combustion (NP) ;

calculer le rapport air/carburant (AFL) local en calculant un rapport entre la quantité d'air de zone de combustion (NPK) et une quantité du carburant injecté vers la zone de combustion (NP), le rapport air/carburant (AFL) local calculé étant un rapport air/carburant dans la zone de combustion (NP) pendant l'exécution d'une injection principale ; et

exécuter une injection en plusieurs étapes depuis la soupape d'injection de carburant (4), dans lequel

l'injection principale est une injection avec une quantité d'injection la plus grande dans l'injection en plusieurs étapes ;

quand l'unité de commande électronique (80) détermine que le rapport air/carburant (AFL) local est plus riche que le rapport air/carburant nécessaire prédéterminé, l'unité de commande électronique (80) est configurée pour déterminer si une condition pour ne pas augmenter la pression de suralimentation est satisfaite ou non ; et

quand l'unité de commande électronique (80) détermine que la condition pour ne pas augmenter la pression de suralimentation est satisfaite, l'unité de commande électronique (80) est configurée pour basculer l'injection principale d'une injection unique à une injection divisée.

2. Dispositif de commande selon la revendication 1, dans lequel :

l'unité de commande électronique (80) est configurée pour :

régler une pression de suralimentation cible en se basant sur un état de fonctionnement du moteur à combustion interne (1) ;

réguler la pression de suralimentation de manière à atteindre la pression de suralimentation cible ; et

modifier la pression de suralimentation cible de telle sorte que la quantité d'oxygène dans la zone de combustion (NP) atteigne une quantité d'oxygène nécessaire quand une quantité d'oxygène dans la zone de combustion (NP) est supposée avoir une distribution uniforme à un moment où le rapport air/carburant (AFL) local est le rapport air/carburant nécessaire prédéterminé.

3. Procédé de commande pour un moteur à combustion interne (1), le moteur à combustion interne (1) étant un moteur à combustion interne à autoallumage par compression, le moteur à combustion interne (1) étant configuré pour être commandé par une unité de commande électronique (80), le moteur à combustion interne (1) comportant un surcompresseur (11) et une soupape d'injection de carburant (4),

le surcompresseur (11) étant un surcompresseur à capacité variable comportant une aube mobile (11v),

la soupape d'injection de carburant (4) étant configurée pour injecter directement du carburant dans une chambre de combustion (71) du moteur à combustion interne (1),

le procédé de commande comprenant les opérations suivantes :

réguler une pression de suralimentation en air d'admission en réglant un degré d'ouverture de l'aube mobile (11v) ;

calculer un rapport air/carburant (AFL) local, le rapport air/carburant (AFL) local étant un rapport air/carburant dans une zone de combustion (NP), la zone de combustion (NP) étant une zone où le carburant est injecté depuis la soupape d'injection de carburant (4) dans la chambre de combustion (71) ;

déterminer si le rapport air/carburant (AFL) local est plus riche qu'un rapport air/carburant nécessaire prédéterminé ou non ; et

augmenter la pression de suralimentation, quand l'unité de commande électronique (80) détermine que le rapport air/carburant (AFL) local est plus riche que le rapport air/carburant nécessaire prédéterminé ;

calculer un volume (NPv) de la zone de combustion (NP) en se basant sur une distance de parcours de jet de carburant (Lsp) du carburant injecté vers la zone de combustion (NP) et un moment d'injection du carburant ;

calculer une quantité d'air de zone de combustion (NPK) en se basant sur la quantité de l'air détecté par le capteur de quantité d'air d'admission (19), la quantité d'air de zone de combustion (NPK) étant une quantité d'air dans le volume (NPv) de la zone de combustion (NP) ;

calculer le rapport air/carburant (AFL) local en calculant un rapport entre la quantité d'air de zone de combustion (NPK) et une quantité du carburant injecté vers la zone de combustion (NP), le rapport air/carburant (AFL) local calculé étant un rapport air/carburant dans la zone de combustion (NP) pendant l'exécution d'une injection principale ; et

exécuter une injection en plusieurs étapes depuis la soupape d'injection de carburant (4),

l'injection principale étant une injection avec une quantité d'injection la plus grande dans l'injection en plusieurs étapes ;
quand l'unité de commande électronique (80) détermine que le rapport air/carburant (AFL) local est plus riche que le rapport air/carburant nécessaire prédéterminé, déterminer si une condition pour ne pas augmenter la pression de suralimentation est satisfaite ou non ; et
quand l'unité de commande électronique (80) détermine que la condition pour ne pas augmenter la pression de suralimentation est satisfaite, basculer l'injection principale d'une injection unique à une injection divisée.

FIG. 1

BOOST PRESSURE CONTROLLING PORTION — 80A — 80
LOCAL AIR-FUEL RATIO CALCULATING PORTION — 80B
AIR-FUEL RATIO DETERMINATION PORTION — 80C
BOOST PRESSURE CHANGE PORTION — 80D
INCREASE DETERMINATION PORTION — 80E
SPLIT INJECTION PORTION — 80F

EP 3 273 038 B1

# FIG. 2

# FIG. 3

# FIG. 4

# FIG. 5

# FIG. 6

$$R2 = Ltop - LY$$
$$R1 = Ltop$$
$$(Ltop = Lsp \cdot \cos\theta s + L4)$$

# FIG. 7

$$R2 = L1 - LY$$
$$R1 = Ltop$$
$$(Ltop = Lsp \cdot \cos\theta s + L4)$$

# FIG. 8

$T (= Ltop - L1 - L2)$

$R2 = L1 - T$

$R1 = Ltop$
$(Ltop = Lsp \cdot \cos\theta s + L4)$

# FIG. 9

START

CALCULATE TARGET BOOST PRESSURE PIMP — S10

CALCULATE BASIC OPENING
DEGREE COMMAND VALUE VNb — S20

CALCULATE FEEDBACK CORRECTION TERM KVN BASED
ON DEVIATION BETWEEN TARGET BOOST PRESSURE
PIMP AND BOOST PRESSURE PIM — S30

CALCULATE OPENING DEGREE COMMAND VALUE VNp
(VNp ← VNb+KVN) — S40

ADJUST OPENING DEGREE OF NOZZLE VANE — S50

END

# FIG. 10

```
                    START

              EXECUTE CALCULATION PROCESS      ─S100
                OF LOCAL AIR-FUEL RATIO AFL

                                    ─S200
                       LOCAL AIR-FUEL
        NO         RATIO AFL RICHER THAN
                    REQUIRED AIR-FUEL
                        RATIO AFD?

                            YES
                                    ─S300
                         DIFFICULT              YES
                     TO INCREASE BOOST
                        PRESSURE?

                            NO    ─S400                           ─S500
              EXECUTE INCREASE PROCESS            EXECUTE SPLIT INJECTION
                 OF BOOST PRESSURE                   OF MAIN INJECTION

                            END
```

# FIG. 11

LARGE

SMOKE
GENERATION
AMOUNT

TARGET
GENERATION
AMOUNT

REQUIRED AIR-FUEL RATIO AFD     LOCAL AIR-FUEL RATIO AFL   LARGE

26

# FIG. 12

```
START
```

↓ S110

FIND FUEL SPRAY TRAVEL DISTANCE Lsp BASED ON
FUEL PRESSURE PR AND MAIN INJECTION AMOUNT QM

↓ S120

FIND COMBUSTION FIELD VOLUME NPv BASED ON
FUEL SPRAY TRAVEL DISTANCE Lsp AND MAIN INJECTION TIMING Tm

↓ S130

FIND COMBUSTION CHAMBER VOLUME NSv
BASED ON MAIN INJECTION TIMING Tm

↓ S140

CALCULATE CYLINDER AIR AMOUNT TK BASED ON INTAKE
AIR AMOUNT GA AND ENGINE ROTATION SPEED NE

↓ S150

CALCULATE AIR DENSITY KM IN COMBUSTION CHAMBER BASED ON
CYLINDER AIR AMOUNT TK AND COMBUSTION CHAMBER VOLUME NSv

↓ S160

CONVERT AIR DENSITY KM IN COMBUSTION CHAMBER
INTO OXYGEN DENSITY SM IN COMBUSTION CHAMBER
(SM = KM × 0.23)

↓ S170

CALCULATE COMBUSTION FIELD OXYGEN AMOUNT NPS
(NPS = OXYGEN DENSITY SM IN COMBUSTION CHAMBER ×
COMBUSTION FIELD VOLUME NPv)

↓ S180

CONVERT COMBUSTION FIELD OXYGEN AMOUNT NPS
INTO COMBUSTION FIELD AIR AMOUNT NPK
(NPK = COMBUSTION FIELD OXYGEN AMOUNT NPS × 4.32)

↓ S190

CALCULATE LOCAL AIR-FUEL RATIO AFL
(AFL = COMBUSTION FIELD AIR AMOUNT NPK /
MAIN INJECTION AMOUNT QM)

```
END
```

# FIG. 13

START

S410

CALCULATE REQUIRED OXYGEN AMOUNT NPDS
IN COMBUSTION FIELD
(NPDS = REQUIRED AIR-FUEL RATIO AFD ×
MAIN INJECTION AMOUNT QM × 0.23)

S420

CALCULATE REQUIRED OXYGEN DENSITY
NPDSM IN COMBUSTION FIELD
(NPDSM = REQUIRED OXYGEN AMOUNT NPDS IN
COMBUSTION FIELD / COMBUSTION FIELD VOLUME NPv)

S430

CALCULATE REQUIRED OXYGEN AMOUNT NSDS
IN COMBUSTION CHAMBER
(NSDS = REQUIRED OXYGEN DENSITY NPDSM IN
COMBUSTION FIELD × COMBUSTION CHAMBER VOLUME NSv)

S440

CALCULATE REQUIRED AIR AMOUNT NSDK IN
COMBUSTION CHAMBER
(NSDK = REQUIRED OXYGEN AMOUNT NSDS IN
COMBUSTION CHAMBER × 4.32)

S450

CALCULATE REQUIRED BOOST PRESSURE
PIMD BASED ON REQUIRED AIR AMOUNT NSDK
IN COMBUSTION CHAMBER AND THE LIKE

S460

TARGET BOOST PRESSURE PIMP ←
REQUIRED BOOST PRESSURE PIMD

END

# FIG. 14

START

↓

S510
CALCULATE FIRST MAIN INJECTION AMOUNT QM1,
SECOND MAIN INJECTION AMOUNT QM2,
THIRD MAIN INJECTION AMOUNT QM3

↓

S520
EXECUTE SPLIT INJECTION OF MAIN INJECTION

↓

RETURN

# FIG. 15

LARGE

INJECTION AMOUNT

REQUIRED
INJECTION AMOUNT
QMD

QM2          QM3

(QM=QM1)          MAXIMUM AMOUNT
QMmax

LARGE

MAIN INJECTION AMOUNT
QM

29

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002115554 A
- EP 2915983 A
- US 2011180039 A